Europäisches Patentamt

European Patent Office

Office européen des brevets

(11) **EP 4 011 949 B1**

(12) **EUROPEAN PATENT SPECIFICATION**

(45) Date of publication and mention
of the grant of the patent:
**26.02.2025 Bulletin 2025/09**

(21) Application number: **20851451.3**

(22) Date of filing: **04.08.2020**

(51) International Patent Classification (IPC):
*C08K 7/02* (2006.01)  *C08L 67/00* (2006.01)
*C08L 67/04* (2006.01)  *C08J 5/04* (2006.01)
*C08G 63/60* (2006.01)

(52) Cooperative Patent Classification (CPC):
(C-Sets available)
**C08G 63/605; B29B 7/007; B29B 7/726;
B29B 7/823; B29B 7/90; B29B 9/12; B29B 9/14;
B29C 48/0022; B29C 48/154; B29C 48/34;
B29C 48/40; C08G 63/065; C08G 63/80;
C08J 5/042; C08J 5/043;**          (Cont.)

(86) International application number:
**PCT/JP2020/029752**

(87) International publication number:
**WO 2021/029267 (18.02.2021 Gazette 2021/07)**

(54) **LIQUID CRYSTAL POLYESTER RESIN MOLDED ARTICLE**

FORMGEGENSTAND AUS FLÜSSIGKRISTALLPOLYESTERHARZ

ARTICLE MOULE DE RESINE DE POLYESTER À CRISTAUX LIQUIDES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2019  JP 2019148154
16.04.2020  JP 2020073526**

(43) Date of publication of application:
**15.06.2022 Bulletin 2022/24**

(73) Proprietor: **SUMITOMO CHEMICAL COMPANY,
LIMITED
Tokyo 103-6020 (JP)**

(72) Inventors:
• **TAMURA Tasuku
Tsukuba-shi, Ibaraki 300-3294 (JP)**
• **SUGIYAMA Takayuki
Tsukuba-shi, Ibaraki 300-3294 (JP)**

(74) Representative: **Vossius & Partner
Patentanwälte Rechtsanwälte mbB
Siebertstraße 3
81675 München (DE)**

(56) References cited:
**EP-A1- 3 705 526     EP-A1- 4 011 942
WO-A1-2008/123449   WO-A1-2012/090411
WO-A1-2019/087965   WO-A1-2019/098228
JP-A- 2002 088 259    JP-A- 2004 291 558
JP-A- 2009 221 427    JP-A- 2018 104 507**

• **GARÇA CARVALHO M ET AL: "A comparative
study for two automated techniques for
measuring fiber length", TAPPI JOURNAL,
TECHNICAL ASSOCIATION OF THE PULP &
PAPER INDUSTRY, ATLANTA US, vol. 80, no. 2, 1
February 1997 (1997-02-01), pages 137 - 142,
XP002682636, ISSN: 0734-1415**

**(Cont. next page)**

(52) Cooperative Patent Classification (CPC): (Cont.)
**C08L 67/03;** B29B 7/38; B29B 9/06; C08J 2367/00;
C08J 2367/03; C08J 2477/02; C08K 2201/004

C-Sets
**C08L 67/03, C08K 7/04, C08L 77/02;**
**C08L 67/03, C08K 7/14, C08L 77/02**

**Description**

[Technical Field]

The present invention relates to a liquid crystal polyester resin molded article.

Priority is claimed on Japanese Patent Application No. 2019-148154, filed August 9, 2019, and Japanese Patent Application No. 2020-073526, filed April 16, 2020.

[Background Art]

Liquid crystal polyester is known to have high fluidity, heat resistance, and dimensional accuracy. The liquid crystal polyester is rarely used alone, and is used as a liquid crystal polyester resin composition containing a filler in order to satisfy required characteristics (for example, flexural characteristics and impact resistance) in various applications. It is known that a molded article produced from such a liquid crystal polyester resin composition is lightweight and has high strength.

In recent years, in a field of transportation equipment including automobiles and aircraft, weight reduction of parts has been promoted for the purpose of improving fuel efficiency. In order to reduce the weight of the parts, it has been considered to use a resin material instead of the current metal material for material of each part. For example, by using the liquid crystal polyester resin composition as a molding material for an outer panel member for an automobile, an automobile which is lighter than the current product can be obtained.

However, the molded article obtained from the above-described liquid crystal polyester resin composition has a problem that mechanical properties are lower than those of the molded article obtained from the metal material.

In the related art, in order to improve mechanical strength, heat resistance, particle resistance, and the like, a liquid crystal polyester resin composition containing a liquid crystal polyester and a fibrous filler and a molded article obtained by using the same have been proposed (for example, see Patent Document 1).

WO2019/087965A1 discloses a liquid-crystalline-polyester resin composition comprising a liquid crystal polyester resin; 15 parts by mass or more and 100 parts by mass or less of a carbon fiber with respect to 100 parts by mass of the liquid crystal polyester resin; and 0.001 parts by mass or more and 0.02 parts by mass or less of a fullerene with respect to 100 parts by mass of the carbon fiber.

[Citation List]

[Patent Document]

[Patent Document 1]
Japanese Unexamined Patent Application, First Publication No. 2012-193270

[Summary of Invention]

[Technical Problem]

Further weight reduction is required in formation of a large molded article such as an outer panel member for automobiles. However, with the demand for weight reduction and thinning of the molded article, a predetermined strength is required for the molded article, and in particular, there is a problem that a portion having a weak strength is partially produced depending on a structure of the molded article.

For example, in a Charpy impact test of the liquid crystal polyester resin composition in the related art, in which the fibrous filler is simply mixed with the liquid crystal polyester, such a problem appears as a large difference in Charpy impact strength, that is, a large notch sensitivity, between an unnotched specimen (that is, a cutout) and a notched specimen. In a molded article using a material having a high notch sensitivity, there is a problem that a degree of freedom in design is restricted due to the need to provide roundness in a corner part and an angle part.

The present invention is made in consideration of these circumstances, and an object thereof is to provide a liquid crystal polyester resin molded article having a low notch sensitivity in a Charpy impact test.

[Solution to Problem]

The present invention has the following aspects.

[1] A liquid crystal polyester resin molded article contains:

a thermoplastic resin comprising a liquid crystal polyester; and
a fibrous filler,
in which the liquid crystal polyester resin molded article contain the fibrous filler in an amount of equal to or greater than 1 part by mass and equal to or smaller than 120 parts by mass with respect to 100 parts by mass of the thermoplastic resin,
the proportion of the liquid crystal polyester with respect to 100 mass% of the thermoplastic resin is equal to or greater than 80
mass% and equal to or smaller than 100 mass%, and
the length-weighted average fiber length of the fibrous filler is equal to or greater than 0.7 mm.

[2] The liquid crystal polyester resin molded article according to [1],

the liquid crystal polyester comprises a repeating unit represented by Formula (1), (2), or (3),
the amount of the repeating unit represented by Formula (1) is equal to or greater than 30 mol% and equal to or smaller than 100 mol% with respect to the total amount of the repeating units represented by Formulae (1), (2), and (3),
the amount of the repeating unit represented by Formula (2) is equal to or greater than 0 mol% and equal to or smaller than 35 mol% with respect to the total amount of the repeating units represented by Formulae (1), (2), and (3), and
the amount of the repeating unit represented by Formula (3) is equal to or greater than 0 mol% and equal to or smaller than 35 mol% with respect to the total amount of the repeating units represented by Formulae (1), (2), and (3),

(1) $-O-Ar^1-CO-$
(2) $-CO-Ar^2-CO-$
(3) $-X-Ar^3-Y-$
(in Formulae (1) to (3), $Ar^1$ represents a phenylene group, a naphthylene group, or a biphenylylene group, $Ar^2$ and $Ar^3$ each independently represent a phenylene group, a naphthylene group, a biphenylene group, or a group represented by Formula (4), X and Y each independently represent an oxygen atom or an imino group, and hydrogen atoms in the group represented by $Ar^1$, $Ar^2$, or $Ar^3$ may be each independently substituted with a halogen atom, an alkyl group, or an aryl group)
(4) $-Ar^4-Z-Ar^5$.
(in Formula (4), $Ar^4$ and $Ar^5$ each independently represent a phenylene group or a naphthylene group, and Z represents an oxygen atom, a sulfur atom, a carbonyl group, a sulfonyl group, or an alkylidene group).

[3] The liquid crystal polyester resin molded article according to [1] or [2],
the fibrous filler is at least one selected from the group consisting of a carbon fiber and a glass fiber.
[4] The liquid crystal polyester resin molded article according to any one of [1] to [3], the proportion of a fibrous filler having a fiber length of equal to or greater than 1 mm with respect to 100% of the fibrous filler is equal to or greater than 8% and equal to or smaller than 100%.

[Advantageous Effects of Invention]

According to the present invention, it is possible to provide a liquid crystal polyester resin molded article having a low notch sensitivity in a Charpy impact test.

[Brief Description of Drawings]

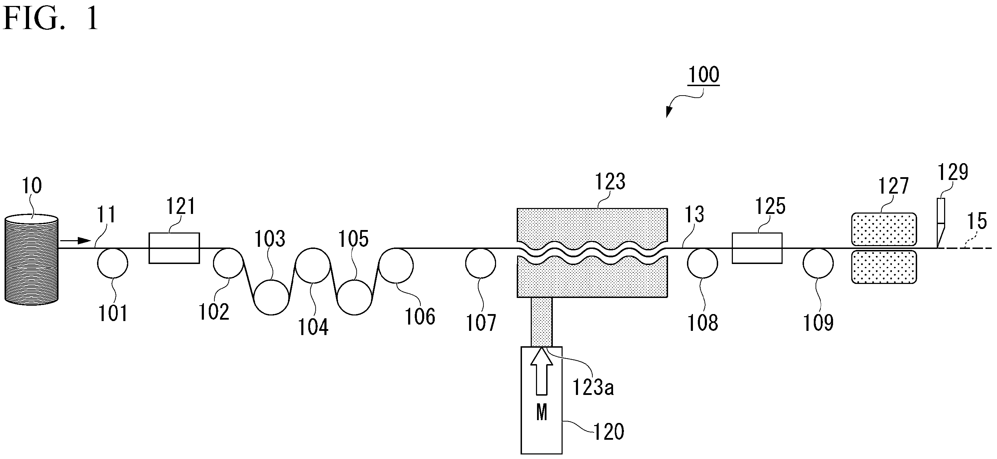

Fig. 1 is a schematic view showing an example of a production equipment of liquid crystal polyester resin pellets, which are used for producing a liquid crystal polyester resin molded article of the present embodiment.

[Description of Embodiments]

(Liquid Crystal Polyester Resin Molded Article)

A liquid crystal polyester resin molded article of the present embodiment contains a thermoplastic resin comprising a liquid crystal polyester and a fibrous filler.
In the present specification, a composition containing a thermoplastic resin comprising a liquid crystal polyester

and a fibrous filler is referred to as a "liquid crystal polyester resin composition". A molding material for producing a molded article, which is obtained by granulating the liquid crystal polyester resin composition, is referred to as "liquid crystal polyester resin pellets". A molded article obtained from the liquid crystal polyester resin composition is referred to as a "liquid crystal polyester resin molded article".

In the liquid crystal polyester resin molded article of the present embodiment, the fibrous filler is contained in an amount of equal to or greater than 1 part by mass and equal to or smaller than 120 parts by mass with respect to 100 parts by mass of the thermoplastic resin, the proportion of the liquid crystal polyester with respect to 100 mass% of the thermoplastic resin is equal to or greater than 80 mass% and equal to or
smaller than 100 mass%,

and a length-weighted average fiber length of the fibrous filler is equal to or greater than 0.7 mm. By adopting the above-described configuration, Charpy impact strength of the liquid crystal polyester resin molded article of the present embodiment and a liquid crystal polyester resin molded article having the same composition as the liquid crystal polyester resin molded article of the present embodiment can be increased, and a notch sensitivity can be reduced in a Charpy impact test.

The length-weighted average fiber length of the fibrous filler in the molded article can be obtained by the following procedure. First, the molded article is sintered to remove a resin component, leaving only the fibrous filler. Next, the fibrous filler is dispersed in an aqueous solution containing a surfactant to prepare a fibrous filler dispersion liquid. By observing the fibrous filler dispersion liquid with a microscope and measuring the length of more than 500 fibers, the length-weighted average fiber length $lm = (\Sigma li^2 \times ni) / (\Sigma li \times ni)$ of the fibrous filler in the molded article is obtained.

li: fiber length of fibrous filler
ni: number of fibrous fillers with fiber length li

When the length-weighted average fiber length of the fibrous filler in a Charpy specimen having a notch is equal to or greater than 0.7 mm, and the Charpy specimen has the above-described composition, it has an effect of suppressing progress of cracks due to the impact concentrated around the notch and increasing the impact strength, and as a result, it has the same impact strength as a Charpy specimen having no notch. It is considered that this makes it possible to reduce the notch sensitivity.

Hereinafter, the liquid crystal polyester resin molded article of the present embodiment will be described as a specimen used in the Charpy impact test. The shape of the liquid crystal polyester resin molded article of the present invention is not limited to the shape of the specimen used in the Charpy impact test.

Specifically, in the above-described liquid crystal polyester resin molded article, as a Charpy impact strength Ea of a notched specimen having a 45° V-shaped groove with a depth of 2 mm in the center of a length of 80 mm, a width of 10 mm, and a thickness of 4 mm, equal to or greater than 8 $kJ/m^2$ is preferable, equal to or greater than 9 $kJ/m^2$ is more preferable, equal to or greater than 10 $kJ/m^2$ is even more preferable, and equal to or greater than 15 $kJ/m^2$ is particularly preferable. In addition, in the above-described liquid crystal polyester resin molded article, as a Unnotched Charpy impact strength Eb without a notch of a specimen with a length of 80 mm, a width of 10 mm, and a thickness of 4 mm, equal to or greater than 10 $kJ/m^2$ is preferable, equal to or greater than 11 $kJ/m^2$ is more preferable, equal to or greater than 14 $kJ/m^2$ is even more preferable, and equal to or greater than 15 $kJ/m^2$ is particularly preferable. The above-described Charpy impact strength Ea may be equal to or greater than 8 $kJ/m^2$ and equal to or smaller than 100 $kJ/m^2$, equal to or greater than 9 $kJ/m^2$ and equal to or smaller than 90 $kJ/m^2$, equal to or greater than 10 $kJ/m^2$ and equal to or smaller than 85 $kJ/m^2$, or equal to or greater than 10 $kJ/m^2$ and equal to or smaller than 70 $kJ/m^2$. The above-described Charpy impact strength Eb may be equal to or greater than 10 $kJ/m^2$ and equal to or smaller than 100 $kJ/m^2$, equal to or greater than 11 $kJ/m^2$ and equal to or smaller than 90 $kJ/m^2$, equal to or greater than 14 $kJ/m^2$ and equal to or smaller than 85 $kJ/m^2$, or equal to or greater than 14 $kJ/m^2$ and equal to or smaller than 70 $kJ/m^2$.

In addition, in the above-described liquid crystal polyester resin molded article, the Notched Charpy impact strength of the specimen having a 45° V-shaped groove with a depth of 2 mm in the center of a length of 80 mm, a width of 10 mm, and a thickness of 4 mm and the unnotched Charpy impact strength Eb of the specimen with a length of 80 mm, a width of 10 mm, and a thickness of 4 mm can satisfy Expression (5).

$$1 - (Ea / Eb) \leq 0.4 \quad \cdots (5)$$

The notch sensitivity represented by Expression "1 - (Ea / Eb)" can be more preferably equal to or smaller than 0.35 and particularly preferably equal to or smaller than 0.30. The notch sensitivity represented by Expression "1 - (Ea / Eb)" may be equal to or greater than -0.50 and equal to or smaller than 0.40, equal to or greater than -0.45 and equal to or smaller than 0.35, or equal to or greater than -0.40 and equal to or smaller than 0.30.

The above-described specimen with a length of 80 mm, a width of 10 mm, and a thickness of 4 mm is produced by an injection molding a molded article using liquid crystal polyester resin pellets at an injection speed of 20 mm/s, a screw rotation speed of 100 rpm, a holding pressure of 100 MPa, and a back pressure of 0 MPa, and the above-described specimen having a 45° V-shaped groove with a depth of 2 mm in the center of a length of 80 mm, a width of 10 mm, and a thickness of 4 mm is produced by applying a notch processing notched angle of 45° and a depth of 2 mm to the center of the specimen having a length of 80 mm, a width of 10 mm, and a thickness of 4 mm.

In an impact test of a notched plastic specimen, compared to an impact test of an unnotched plastic specimen, stress concentration is usually generated around the notch and the impact strength is usually significantly reduced. However, in the impact test of the specimen of the liquid crystal polyester resin molded article of the present embodiment without a notch, in addition to the large impact strength, the impact strength is maintained even in the impact test of the notched specimen. This is because the impact of the liquid crystal polyester concentrated around the notch is guided in an orientation direction of the liquid crystal polyester, so that it is considered that impact energy can be mitigated by friction generated at an interface between the fibrous filler existing so that a length direction is along the orientation direction of the liquid crystal polyester and the liquid crystal polyester resin. As a result, it is considered that, in the specimen of the liquid crystal polyester resin molded article of the present embodiment, the notch sensitivity represented by Expression "1 - (Ea / Eb)" can be reduced.

<Thermoplastic Resin comprising Liquid Crystal Polyester>

In the liquid crystal polyester resin molded article of the present embodiment, the proportion of the liquid crystal polyester with respect to 100 mass% of the thermoplastic resin is
equal to or greater than 80 mass% and equal to or smaller than 100 mass%, more preferably equal to or greater than 85 mass% and equal to or smaller than 100 mass%, and even more preferably equal to or greater than 90 mass% and equal to or smaller than 100 mass%.

In the liquid crystal polyester resin molded article of the present embodiment, the above-described fibrous filler is glass fiber, and the proportion of the liquid crystal polyester with respect to 100 mass% of the thermoplastic resin is equal to or greater than 80 mass% and equal to or smaller than 90 mass% and more preferably equal to or greater than 85 mass% and equal to or smaller than 90 mass%.

In the liquid crystal polyester resin molded article of the present embodiment, the above-described fibrous filler is at least one selected from the group consisting of a carbon fiber and a glass fiber, and the proportion of the liquid crystal polyester with respect to 100 mass% of the thermoplastic resin is equal to or greater than
80 mass% and equal to or smaller than 100 mass% and more preferably equal to or greater than 85 mass% and equal to or smaller than 100 mass%.

When the proportion of the liquid crystal polyester is equal to or greater than the above-described lower limit value, it has an effect of reducing a notch sensitivity in the Charpy impact test of the liquid crystal polyester resin molded article of the present embodiment and a liquid crystal polyester resin molded article having the same composition as the liquid crystal polyester resin molded article of the present embodiment.

The liquid crystal polyester used in the present embodiment is a liquid crystal polyester which exhibits liquid crystalline properties in a melted state, and the thermoplastic resin containing the liquid crystal polyester also preferably exhibits liquid crystalline properties in a melted state, and preferably melts at a temperature of equal to or lower than 450°C.

The liquid crystal polyester used in the present embodiment may be a liquid crystal polyester amide, a liquid crystal polyester ether, a liquid crystal polyester carbonate, or a liquid crystal polyester imide. The liquid crystal polyester used in the present embodiment is preferably a wholly aromatic liquid crystal polyester having only an aromatic compound as a raw material monomer.

Typical examples of the liquid crystal polyester used in the present embodiment include a material obtained by polymerization (polycondensation) of aromatic hydroxycarboxylic acid, aromatic dicarboxylic acid, and at least one compound selected from the group consisting of aromatic diol, aromatic hydroxyamine, and aromatic diamine, a material obtained by polymerization of plural kinds of aromatic hydroxycarboxylic acid, a material obtained by polymerization of aromatic dicarboxylic acid and at least one compound selected from the group consisting of aromatic diol, aromatic hydroxyamine, and aromatic diamine, and a material obtained by polymerization of polyester such as polyethylene terephthalate and aromatic hydroxycarboxylic acid. Here, as the aromatic hydroxycarboxylic acid, the aromatic dicarboxylic acid, the aromatic diol, the aromatic hydroxyamine, and the aromatic diamine, a polymerizable derivative thereof may be each independently used in place of a part or all thereof.

Examples of a polymerizable derivative of a compound having a carboxyl group, such as the aromatic hydroxycarboxylic acid and the aromatic dicarboxylic acid, include a compound (ester) obtained by converting the carboxyl group into an alkoxycarbonyl group or an aryloxycarbonyl group, a compound (acid halide) obtained by converting the carboxyl group into a haloformyl group, and a compound (acid anhydride) obtained by converting the carboxyl group into an acyloxycarbonyl group. Examples of a polymerizable derivative of a compound having a hydroxyl group, such as the aromatic hydroxycarboxylic acid, the aromatic diol, and the aromatic hydroxyamine, include a compound (acylated product) obtained by acylating the hydroxyl group and converting it into an acyloxyl group. Examples of a polymerizable derivative of a compound having an amino group, such as the aromatic hydroxyamine and the aromatic diamine, include a compound (acylated product) obtained by acylating the amino group and converting it into an acylamino group.

The liquid crystal polyester used in the present embodiment preferably comprises a repeating unit represented by Formula (1) (hereinafter, may be referred to as a "repeating unit (1)"), and more preferably comprises the repeating unit (1), a repeating unit represented by Formula (2) (hereinafter, may be referred to as a "repeating unit (2)"), and a repeating unit represented by Formula (3) (hereinafter, may be referred to as a "repeating unit (3)").

(1) -O-Ar$^1$-CO-
(2) -CO-Ar$^2$-CO-
(3) -X-Ar$^3$-Y-
(Ar$^1$ represents a phenylene group, a naphthylene group, or a biphenylylene group, Ar$^2$ and Ar$^3$ each independently represent a phenylene group, a naphthylene group, a biphenylene group, or a group represented by Formula (4), X and Y each independently represent an oxygen atom or an imino group (-NH-), and hydrogen atoms in the group represented by Ar$^1$, Ar$^2$, or Ar$^3$ may be each independently substituted with a halogen atom, an alkyl group, or an aryl group.)
(4) -Ar$^4$-Z-Ar$^5$-
(Ar$^4$ and Ar$^5$ each independently represent a phenylene group or a naphthylene group, and Z represents an oxygen atom, a sulfur atom, a carbonyl group, a sulfonyl group, or an alkylidene group.)

Examples of the above-described halogen atom include a fluorine atom, a chlorine atom, a bromine atom, and an iodine atom. Examples of the above-described alkyl group include a methyl group, an ethyl group, an n-propyl group, an isopropyl group, an n-butyl group, an isobutyl group, an s-butyl group, a t-butyl group, an n-hexyl group, a 2-ethylhexyl group, an n-octyl group, and an n-decyl group, and the number of carbon atoms thereof is preferably 1 to 10. Examples of the above-described aryl group include a phenyl group, an o-tolyl group, an m-tolyl group, a p-tolyl group, an 1-naphthyl group, and a 2-naphthyl group, and the number of carbon atoms thereof is preferably 6 to 20. When the above-described hydrogen atom is substituted with these groups, the number thereof is preferably 2 or less and more preferably 1 or less for each of the groups represented by Ar$^1$, Ar$^2$, or Ar$^3$, each independently.

Examples of the above-described alkylidene group include a methylene group, an ethylidene group, an isopropylidene group, an n-butylidene group, and a 2-ethylhexylidene group, and the number of carbon atoms thereof is preferably 1 to 10.

The repeating unit (1) is a repeating unit derived from a predetermined aromatic hydroxycarboxylic acid. As the repeating unit (1), a repeating unit in which Ar$^1$ is a p-phenylene group (repeating unit derived from p-hydroxybenzoic acid), or a repeating unit in which Ar$^1$ is a 2,6-naphthylene group (repeating unit derived from 6-hydroxy-2-naphthoic acid) is preferable.

In the present specification, the "derived" means that, in order to polymerize the raw material monomer, the chemical structure of a functional group which contributes to the polymerization changes, and no other structural change occurs.

The repeating unit (2) is a repeating unit derived from a predetermined aromatic dicarboxylic acid. As the repeating unit (2), a repeating unit in which Ar$^2$ is a p-phenylene group (repeating unit derived from terephthalic acid), a repeating unit in which Ar$^2$ is a m-phenylene group (repeating unit derived from isophthalic acid), a repeating unit in which Ar$^2$ is a 2,6-naphthylene group (repeating unit derived from 2,6-naphthalenedicarboxylic acid), or a repeating unit in which Ar$^2$ is a diphenyl ether-4,4'-diyl group (repeating unit derived from diphenyl ether-4,4'-dicarboxylic acid) is preferable.

The repeating unit (3) is a repeating unit derived from a predetermined aromatic diol, aromatic hydroxylamine, or aromatic diamine. As the repeating unit (3), a repeating unit in which Ar$^3$ is a p-phenylene group (repeating unit derived from hydroquinone, p-aminophenol, or p-phenylenediamine), or a repeating unit in which Ar$^3$ is a 4,4'-biphenylylene group (repeating unit derived from 4,4'-dihydroxybiphenyl, 4-amino-4'-hydroxybiphenyl, or 4,4'-diaminobiphenyl) is preferable.

The amount the repeating unit (1) is preferably equal to or greater than 30 mol% and equal to or smaller than 100 mol%, more preferably equal to or greater than 30 mol% and equal to or smaller than 90 mol%, even more preferably equal to or greater than 40 mol% and equal to or smaller than 80 mol%, still more preferably equal to or greater than 45 mol% and equal to or smaller than 80 mol%, even still more preferably equal to or greater than 50 mol% and equal to or smaller than 70 mol%, and particularly preferably equal to or greater than 50 mol% and equal to or smaller than 65 mol% with respect to a total amount of all repeating units (value obtained by adding up a substance amount equivalent (mol) of each repeating unit, which is obtained by dividing mass of each repeating unit constituting the liquid crystal polyester resin by formula weight of each repeating unit).

The amount the repeating unit (2) is preferably equal to or greater than 0 mol% and equal to or smaller than 35 mol%, more preferably equal to or greater than 5 mol% and equal to or smaller than 35 mol%, even more preferably equal to or greater than 10 mol% and equal to or smaller than 35 mol%, still more preferably equal to or greater than 15 mol% and equal to or smaller than 30 mol%, even still more preferably equal to or greater than 17.5 mol% and equal to or smaller than 27.5 mol%, and particularly preferably equal to or greater than 17.5 mol% and equal to or smaller than 25 mol% with respect to the total amount of all repeating units.

The amount the repeating unit (3) is preferably equal to or greater than 0 mol% and equal to or smaller than 35 mol%, more preferably equal to or greater than 5 mol% and equal to or smaller than 35 mol%, even more preferably equal to or greater than 10 mol% and equal to or smaller than 35 mol%, still more preferably equal to or greater than 15 mol% and equal to or smaller than 30 mol%, even still more preferably equal to or greater than 17.5 mol% and equal to or smaller than 27.5 mol%, and particularly preferably equal to or greater than 17.5 mol% and equal to or smaller than 25 mol% with respect to the total amount of all repeating units.

However, the total amount of the repeating units (1), (2), and (3) does not exceed 100 mol%.

When the amount of the repeating unit (1) is higher, it is easier to improve melt fluidity, heat resistance, or strength and rigidity. However, when the amount is too high, melting temperature or melting viscosity tends to increase, and the temperature required for molding tends to be high.

The proportion of the amount of the repeating unit (2) to the amount of the repeating unit (3) is shown as [content of repeating unit (2)]/[content of repeating unit (3)] (mol/mol), and is preferably 0.9/1 to 1/0.9, more preferably 0.95/1 to 1/0.95, and even more preferably 0.98/1 to 1/0.98.

The liquid crystal polyester used in the present embodiment may have two or more repeating units (1) to (3) each independently. In addition, the liquid crystal polyester may have a repeating unit other than the repeating units (1) to (3), and the amount thereof is preferably equal to or smaller than 10 mol% and more preferably equal to or smaller than 5 mol% with respect to the total amount of all repeating units.

Since the melting viscosity tends to be low, the liquid crystal polyester used in the present embodiment preferably has, as the repeating unit (3), a repeating unit in which X and Y are each an oxygen atom, that is, a repeating unit derived from a predetermined aromatic diol, and more preferably has, as the repeating unit (3), only a repeating unit in which X and Y are each an oxygen atom.

The liquid crystal polyester used in the present embodiment is preferably produced by causing melt polymerization of a raw material monomer corresponding to the repeating unit constituting the liquid crystal polyester, and causing solid phase polymerization of the obtained polymer (hereinafter, may be referred to as a "prepolymer"). As a result, it is possible to produce high-molecular-weight liquid crystal polyester having high heat resistance, strength, and rigidity with excellent operability. The melt polymerization may be performed in the presence of a catalyst, and examples of the catalyst include metal compounds such as magnesium acetate, stannous acetate, tetrabutyl titanate, lead acetate, sodium acetate, potassium acetate, and antimony trioxide, and nitrogen-containing heterocyclic compounds such as 4-(dimethylamino) pyridine and 1-methylimidazole. Among these, a nitrogen-containing heterocyclic compound is preferably used.

A flow starting temperature of the liquid crystal polyester used in the present embodiment is preferably equal to or higher than 280°C, more preferably equal to or higher than 280°C and equal to or lower than 400°C, and even more preferably equal to or higher than 280°C and equal to or lower than 380°C.

As the flow starting temperature of the liquid crystal polyester used in the present embodiment is higher, the heat resistance, strength, and rigidity of the liquid crystal polyester tend to be improved. On the other hand, when the flow starting temperature of the liquid crystal polyester is higher than 400°C, the melting temperature and melting viscosity of the liquid crystal polyester tend to be high. Therefore, the temperature required for molding the liquid crystal polyester tends to be high.

In the present specification, the flow starting temperature of the liquid crystal polyester is also referred to as a flow temperature, and is a temperature which is a measure of a molecular weight of the liquid crystal polyester (see "Liquid Crystal Polymer, -Synthesis·Molding·Application-", edited by Naoyuki Koide, CMC Co., Ltd., June 5, 1987, p.95). The flow starting temperature is a temperature at which the viscosity of 4800 Pa·s (48000 poise) is exhibited when the liquid crystal polyester is melted and extruded from a nozzle having an inner diameter of 1 mm and a length of 10 mm by using a capillary rheometer while raising a temperature at a rate of 4°C/min under a load of 9.8 MPa (100 kg/cm$^2$).

In the present embodiment, the proportion of the liquid crystal polyester with respect to 100 mass% of the thermoplastic resin is equal to or greater than 75 mass% and equal to or smaller than 100 mass%, preferably equal to or greater than 80 mass% and equal to or smaller than 100 mass%.

Examples of a resin other than the liquid crystal polyester included in the above-described thermoplastic resin include polyolefin resins such as polyethylene, polypropylene, polybutadiene, and polymethylpentene; vinyl-based resins such as vinyl chloride, vinylidene chloride vinyl acetate, and polyvinyl alcohol; polystyrene-based resins such as polystyrene, acrylonitrile-styrene resin (AS resin), and acrylonitrile-butadiene-styrene resin (ABS resin); polyamide-based resins such as polyamide 6 (nylon 6), polyamide 66 (nylon 66), polyamide 11 (nylon 11), polyamide 12 (nylon 12), polyamide 46 (nylon 46), polyamide 610 (nylon 610), polytetramethylene terephthalamide (nylon 4T), polyhexamethylene terephthalamide (nylon 6T), polymethaxylylene adipamide (nylon MXD6), polynonamethylene terephthalamide (nylon 9T), and polydecamethylene terephthalamide (nylon 10T); polyester-based resins other than the liquid crystal polyester, such as polyethylene terephthalate, polyethylene naphthalate, polybutylene terephthalate, and polytrimethylene terephthalate; polysulfone-based resins such as modified polysulfone, polyethersulfone, polysulfone, and polyphenylsulfone; polyphenylene sulfide-based resins such as linear polyphenylene sulfide, crosslinked polyphenylene sulfide, and semi-crosslinked polyphenylene sulfide; polyetherketone-based resins such as polyetherketone, polyetheretherketone, and polyetherketoneketone; polyimide-based resins such as thermoplastic polyimide, polyamidoimide, and polyetherimide; and thermoplastic resins such as polycarbonate and polyphenylene ether.

The proportion of the above-described thermoplastic resin with respect to 100 mass% of the liquid crystal polyester resin molded article is preferably equal to or greater than 1 mass% and equal to or smaller than 54.5 mass%, more preferably equal to or greater than 1 mass% and equal to or smaller than 53.5 mass%, even more preferably equal to or greater than 9.1 mass% and equal to or smaller than 53.5 mass%, still more preferably equal to or greater than 16.7 mass% and equal to or smaller than 52.4 mass%, and particularly preferably equal to or greater than 16.7 mass% and equal to or smaller than 50.0 mass%.

<Fibrous Filler>

The fibrous filler in the liquid crystal polyester resin molded article of the present embodiment has a length-weighted average fiber length of equal to or greater than 0.7 mm. The length-weighted average fiber length of the fibrous filler is preferably equal to or greater than 1.0 mm, more preferably equal to or greater than 2.0 mm, even more preferably equal to or greater than 2.5 mm, and particularly preferably equal to or greater than 3.0 mm. The length-weighted average fiber length of the fibrous filler is preferably smaller than 50 mm, more preferably equal to or smaller than 40 mm, even more preferably equal to or smaller than 20 mm, still more preferably equal to or smaller than 15 mm, and particularly preferably equal to or smaller than 6 mm. That is, the fibrous filler in the liquid crystal polyester resin molded article preferably has a length-weighted average fiber length of equal to or greater than 1.0 mm and smaller than 50 mm, more preferably equal to or greater than 2.0 mm and equal to or smaller than 40 mm, even more preferably equal to or greater than 2.5 mm and equal to or smaller than 20 mm, and particularly preferably equal to or greater than 3.0 mm and equal to or smaller than 6 mm. When the length-weighted average fiber length of the fibrous filler is equal to or greater than the above-described lower limit value, the notch sensitivity tends to be small. When the length-weighted average fiber length of the fibrous filler is equal to or smaller than the above-described upper limit value, the fibrous filler is easier to mold.

In the liquid crystal polyester resin molded article of the present embodiment, the proportion of a fibrous filler having a fiber length of equal to or greater than 1 mm with respect to 100% of the fibrous filler is preferably equal to or greater than 8% and equal to or smaller than 100%, more preferably equal to or greater than 10% and equal to or smaller than 90%, even more preferably equal to or greater than 20% and equal to or smaller than 90%, and particularly preferably equal to or greater than 30% and equal to or smaller than 90%. By setting the proportion of a fibrous filler having a fiber length of equal to or greater than 1 mm with respect to 100% of the fibrous filler to the range, the impact strength is improved and the notch sensitivity tends to be small.

The proportion of a fibrous filler having a fiber length of equal to or greater than 1 mm in the molded article is determined from a proportion (%) of fibers having a fiber length of equal to or greater than 1 mm, obtained from a calculation expression [number of fibers of equal to or greater than 1 mm / total number of fibers × 100] in a case of measuring the length-weighted average fiber length.

The fibrous filler is a fibrous filler, which may be an inorganic filler or an organic filler.

Examples of the fibrous inorganic filler include glass fibers; carbon fibers such as PAN-based carbon fiber, pitch-based carbon fiber, rayon-based carbon fiber, phenol-based carbon fibers, and lignin-based carbon fiber; ceramic fibers such as silica fiber, alumina fiber, and silica alumina fiber; metallic fibers such as iron, gold, copper, aluminum, brass, and stainless steel; silicon carbide fibers; and boron fibers. In addition, examples of the fibrous inorganic filler include whiskers such as potassium titanate whiskers, barium titanate whiskers, wollastonite whiskers, aluminum borate whiskers, silicon nitride whiskers, and silicon carbide whiskers.

Examples of the fibrous organic filler include polyester fibers, para and meta-aramid fibers, and PBO fibers. In consideration of wear load and availability given to the apparatus during molding, as the fibrous filler, at least one selected from the group consisting of carbon fibers such as PAN-based or pitch-based fiber and glass fibers is more preferable. In addition, for the purpose of imparting conductivity, a fibrous filler coated with a metal such as nickel, copper, and ytterbium may be used.

The tensile strength of the carbon fiber is preferably equal to or greater than 2000 MPa, more preferably equal to or greater than 3000 MPa, and even more preferably equal to or greater than 4000 MPa. In addition, a tensile elongation of the carbon fiber is preferably equal to or greater than 0.5%, more preferably equal to or greater than 1.0%, and even more preferably equal to or greater than 1.8%, and by using carbon fiber having high tensile strength and high elongation, fiber breakage during processing up to production of the molded article is suppressed, and the fiber can be left for a long time, so that the effect of the invention can be easily obtained.

The tensile strength of the carbon fiber may be equal to or smaller than 6000 MPa, equal to or smaller than 5500 MPa, equal to or smaller than 5000 MPa, equal to or greater than 2000 MPa and equal to or smaller than 6000 MPa, equal to or greater than 3000 MPa and equal to or smaller than 5500 MPa, or equal to or greater than 4000 MPa and equal to or smaller than 5000 MPa.

The tensile strength and tensile elongation of the carbon fiber mean values measured in accordance with JIS R 7606:2000.

Among these, PAN-based carbon fiber can be preferably used from the viewpoint that PAN-based carbon fiber has a good balance of tensile strength, tensile elastic modulus, and tensile elongation, and can leave a long residual fiber length.

Examples of the PAN-based carbon fiber include "TORAYCA (registered trademark)" manufactured by Toray Co., Ltd., "Pyrofil (registered trademark)" manufactured by Mitsubishi Chemical Co., Ltd., and "Tenax (registered trademark)" manufactured by Teijin Co., Ltd.

Examples of the pitch-based carbon fiber include "DIALEAD (registered trademark)" manufactured by Mitsubishi Chemical Co., Ltd., "GRANOC (registered trademark)" manufactured by Nippon Graphite Fiber Co., Ltd., "DONACARBO (registered trademark)" manufactured by Osaka Gas Chemical Co., Ltd., and "KRECA (registered trademark)" manufactured by Kureha Corporation.

Examples of the glass fiber include glass fiber for FRP reinforcement, such as E-glass (that is, non-alkali glass), S-glass or T-glass (that is, high strength and high elasticity glass), C-glass (that is, glass for acid-resistant applications), D-glass (that is, low dielectric constant glass), ECR-glass (that is, E-glass substitute glass which does not include $B_2O_3$ and $F_2$), and AR-glass (that is, glass for alkali-resistant applications). Among these, E-glass is preferably used because of its balance of strength and elastic modulus and its availability.

The number-average fiber diameter of the fibrous filler is not particularly limited, but is preferably 1 to 40 $\mu$m and preferably 3 to 35 $\mu$m. When the fibrous filler is carbon fiber, 1 to 15 $\mu$m is preferable, 3 to 10 $\mu$m is more preferable, and 4 to 9 $\mu$m is even more preferable.

When the fibrous filler is glass fiber, 5 to 35 $\mu$m is preferable, 10 to 25 $\mu$m is more preferable, and 15 to 25 $\mu$m is even more preferable.

As the number-average fiber diameter of the fibrous filler, the fibrous filler is observed with a microscope (500 times), and the number average value of measured fiber diameters of 500 fibrous fillers is adopted.

When the number-average fiber diameter of the fibrous filler is equal to or greater than the lower limit value of the above-described preferred range, the fibrous filler is likely to be dispersed in the liquid crystal polyester resin molded article. In addition, it is easy to handle the fibrous filler in a case of producing the liquid crystal polyester resin molded article. On the other hand, in a case of being equal to or smaller than the upper limit value of the above-described preferred range, the liquid crystal polyester is efficiently strengthened by the fibrous filler. Therefore, it is possible to impart excellent Charpy impact strength to the liquid crystal polyester resin molded article of the present embodiment and a liquid crystal polyester resin molded article having the same composition as the liquid crystal polyester resin molded article of the present embodiment.

The fibrous filler may be treated with a sizing-agent. A fibrous filler which is appropriately sized has excellent productivity and quality stability during pellets production, and can reduce the variation of physical properties in the molded article.

The sizing-agent in the present invention is not particularly limited, and examples thereof include nylon-based polymers, polyether-based polymers, epoxy-based polymers, ester-based polymers, urethane-based polymers, and mixed polymers thereof or modified polymers of each of the above. As the sizing-agent, it is also possible to use known coupling agents such as so-called silane coupling agents such as aminosilane and epoxysilane, and titanium coupling agents.

The fibrous filler used in the liquid crystal polyester resin pellets of the present invention does not necessarily require the single fibers be arranged in one direction, but from the viewpoint of productivity in the process of producing the molding material, a state in which the single fibers are arranged in one direction and a fiber bundle is continuous over the length direction of the fibers is preferable.

When the fibrous filler is glass fiber, from the viewpoint of improving handleability and impregnation, the number of single threads in the fibrous filler is preferably equal to or greater than 1000 and equal to or smaller than 10000, more preferably equal to or greater than 1500 and equal to or smaller than 8000, and even more preferably equal to or greater than 2000 and equal to or smaller than 6000.

In addition, when the fibrous filler is carbon fiber, from the same viewpoint, the number of single threads in the fibrous filler is preferably equal to or greater than 10000 and equal to or smaller than 100000, more preferably equal to or greater than 10000 and equal to or smaller than 50000, and even more preferably equal to or greater than 10000 and equal to or smaller than 30000.

The proportion of the fibrous filler in the liquid crystal polyester resin molded article of the present embodiment is equal to or greater than 1 part by mass with respect to 100 parts by mass of the above-described thermoplastic resin, preferably equal to or greater than 10 parts by mass and more preferably equal to or greater than 20 parts by mass.

The above-described proportion of the fibrous filler is equal to or smaller than 120 parts by mass with respect to 100 parts by mass of the above-described thermoplastic resin, preferably equal to or smaller than 115 parts by mass, more preferably equal to or smaller than 110 parts by mass, and even more preferably equal to or smaller than 100 parts by mass.

The above-described proportion of the fibrous filler is equal to or greater than 1 part by mass and equal to or smaller than 120 parts by mass with respect to 100 parts by mass of the above-described thermoplastic resin, preferably equal to or greater than 1 part by mass and equal to or smaller than 115 parts by mass, more preferably equal to or greater than 10 parts by mass and equal to or smaller than 115 parts by mass, even more preferably equal to or greater than 20 parts by mass and equal to or smaller than 110 parts by mass, and particularly preferably equal to or greater than 20 parts by mass and equal to or smaller than 100 parts by mass.

The proportion of the fibrous filler is equal to or greater than 0.99 mass% with respect to 100 mass% of the above-described liquid crystal polyester resin molded article, preferably equal to or greater than 9.1 mass% and more preferably equal to or greater than 16.7 parts by mass.

The proportion of the fibrous filler is equal to or smaller than 54.5 mass% with respect to 100 mass% of the above-described liquid crystal polyester resin molded article, preferably equal to or smaller than 53.5 mass%, more preferably equal to or smaller than 52.4 mass%, and even more preferably equal to or smaller than 50.0 mass%.

The above-described proportion of the fibrous filler is equal to or greater than 0.99 mass% and equal to or smaller than 54.5 mass% with respect to 100 mass% of the above-described liquid crystal polyester resin molded article, preferably equal to or greater than 9.1 mass% and equal to or smaller than 53.5 mass%, more preferably equal to or greater than 16.7 mass% and equal to or smaller than 53.5 mass%, even more preferably equal to or greater than 16.7 mass% and equal to or smaller than 52.4 mass%, and particularly preferably equal to or greater than 16.7 mass% and equal to or smaller than 50.0 mass%.

When the proportion of the fibrous filler is equal to or greater than the lower limit value of the above-described preferred range, the impact mitigation effect of the fibrous filler is likely to be enhanced. On the other hand, in a case of being equal to or smaller than the upper limit value of the above-described preferred range, dispersibility of the fibrous filler in the molded article is good, and the effect of the invention can be stably obtained.

<Other components>

The liquid crystal polyester resin molded article of the present embodiment may include one or more other components such as a filler and an additive as a raw material, as necessary, in addition to the above-described thermoplastic resin comprising a liquid crystal polyester and the above-described fibrous filler.

The filler may be a plate-shaped filler, spherical filler, or other granular fillers. In addition, the filler may be inorganic fillers or organic fillers.

Examples of the plate-shaped inorganic filler include talc, mica, graphite, wollastonite, glass flakes, barium sulfate, and calcium carbonate. Mica may be muscovite, phlogopite, fluorophlogopite, or tetrasilicic mica.

Examples of the granular inorganic filler include silica, alumina, titanium oxide, glass beads, glass balloons, boron nitride, silicon carbide, and calcium carbonate.

Examples of the additive include flame retardants, conductivity imparting agents, crystal nucleating agents, UV absorbers, antioxidants, anti-vibration agents, antibacterial agents, insect repellents, deodorants, coloring inhibitors, thermal stabilizers, mold release agents, antistatic agents, plasticizers, lubricants, colorants, pigments, dyes, foaming agents, antifoaming agents, viscosity modifiers, and surfactants. However, in the liquid crystal polyester resin molded article of the present embodiment, it is preferable that fullerene present in the vicinity of the interface between the carbon fiber bundle and the liquid crystal polyester resin is excluded.

In the liquid crystal polyester resin molded article of the present embodiment, it is preferable that the above-described fibrous filler is contained in an amount of equal to or greater than 1 part by mass and equal to or smaller than 115 parts by mass with respect to 100 parts by mass of the above-described thermoplastic resin, the proportion of the above-described liquid crystal polyester with respect to 100 mass% of the above-described thermoplastic resin is equal to or greater than 80 mass% and equal to or smaller than 100 mass%, and the length-weighted average fiber length of the above-described fibrous filler is equal to or greater than 1.0 mm.

In the liquid crystal polyester resin molded article of the present embodiment, it is more preferable that the above-described fibrous filler is contained in an amount of equal to or greater than 10 parts by mass and equal to or smaller than 115 parts by mass with respect to 100 parts by mass of the above-described thermoplastic resin, the proportion of the above-described liquid crystal polyester with respect to 100 mass% of the above-described thermoplastic resin is equal to or greater than 85 mass% and equal to or smaller than 100 mass%, and the length-weighted average fiber length of the above-described fibrous filler is equal to or greater than 2.0 mm.

In the liquid crystal polyester resin molded article of the present embodiment, it is even more preferable that the above-described fibrous filler is contained in an amount of equal to or greater than 20 parts by mass and equal to or smaller than 110 parts by mass with respect to 100 parts by mass of the above-described thermoplastic resin, the proportion of the above-described liquid crystal polyester with respect to 100 mass% of the above-described thermoplastic resin is equal to or greater than 90 mass% and equal to or smaller than 100 mass%, and the length-weighted average fiber length of the above-described fibrous filler is equal to or greater than 2.5 mm.

In the liquid crystal polyester resin molded article of the present embodiment, it is particularly preferable that the above-described fibrous filler is contained in an amount of equal to or greater than 20 parts by mass and equal to or smaller than 110 parts by mass with respect to 100 parts by mass of the above-described thermoplastic resin, the proportion of the above-described liquid crystal polyester with respect to 100 mass% of the above-described thermoplastic resin is equal to or greater than 90 mass% and equal to or smaller than 100 mass%, and the length-weighted average fiber length of the above-described fibrous filler is equal to or greater than 3.0 mm.

In the liquid crystal polyester resin molded article of the present embodiment, the above-described fibrous filler may be contained in an amount of equal to or greater than 25 parts by mass and equal to or smaller than 100 parts by mass with respect to 100 parts by mass of the above-described thermoplastic resin, the proportion of the above-described liquid crystal polyester with respect to 100 mass% of the above-described thermoplastic resin may be equal to or greater than 80 mass% and equal to or smaller

than 100 mass%, and the length-weighted average fiber length of the above-described fibrous filler may be equal to or greater than 0.75 mm and equal to or smaller than 5.95 mm.

(Method for Producing Liquid Crystal Polyester Resin Pellets)

An example of a method for producing liquid crystal polyester resin pellets used for producing the liquid crystal polyester resin molded article of the present embodiment will be described. For example, a molten product of a thermoplastic resin obtained by melt-kneading a liquid crystal polyester and other components as necessary is impregnated into a fibrous filler and pelletized, pellets in which the fibrous filler is hardened with the thermoplastic resin comprising the liquid crystal polyester can be obtained.

It is preferable that the method for producing the liquid crystal polyester resin pellets of the present embodiment includes a step of impregnating a fiber bundle, which is a raw material of the above-described fibrous filler, with the above-described thermoplastic resin in a melted state to obtain a strand-shaped resin structure, and a step of cutting the strand-shaped resin structure.

Fig. 1 is a schematic view showing an example of a production equipment of the liquid crystal polyester resin pellets, which is used for producing the liquid crystal polyester resin molded article of the present embodiment.

In the present embodiment shown in Fig. 1, a case where liquid crystal polyester resin pellets 15 are obtained by using a fiber bundle 11 in which a plurality of fiber materials are converged will be described.

As shown in Fig. 1, a production equipment 100 is provided with a preheating part 121, an impregnation part 123, a cooling part 125, a haul-off part 127, a cut part 129, and feeding rolls 101 to 109.

Fig. 1 shows a state in which the fiber bundle 11 is continuously unrolled from a fiber roving 10. In the present embodiment, the liquid crystal polyester resin pellets are produced while the fiber bundle 11 unrolled from the fiber roving 10 is transported in a longitudinal direction by the feeding rolls 101 to 109.

A fineness of the fiber roving 10 used for producing the liquid crystal polyester resin pellets are not particularly limited, but is preferably equal to or greater than 200 g/1000 m and more preferably equal to or greater than 800 g/1000 m. When the fineness of the fiber roving 10 is equal to or greater than 200 g/1000 m, the fiber roving 10 can be easily handled in the production of the liquid crystal polyester resin pellets.

In addition, the fineness of the fiber roving 10 is preferably equal to or smaller than 3750 g/1000 m and more preferably equal to or smaller than 3200 g/1000 m. When the fineness of the fiber roving 10 is equal to or smaller than 3750 g/1000 m, the fiber bundle 11 is easily defibrated and easily dispersed in the liquid crystal polyester resin pellets and the liquid crystal polyester resin molded article. When the fineness of the fiber roving 10 is equal to or smaller than 3750 g/1000 m, the fiber bundle 11 can be easily handled in a case of producing the liquid crystal polyester resin pellets and the liquid crystal polyester resin molded article.

In the preheating part 121, the fiber bundle 11 unrolled from the fiber roving 10 is preheated and dried. The heating temperature in this case is not particularly limited, but is, for example, 100°C to 200°C.

In addition, the heating time in the preheating part 121 is not particularly limited, and is, for example, 10 seconds to 5 minutes.

In the impregnation part 123, a resin material M (liquid crystal polyester, other components blended as necessary) is impregnated into the fiber bundle 11.

The resin material M may be put in by a supply port 123a and the molten product obtained by heating in the impregnation part 123 may be impregnated into the fiber bundle 11, or the resin material M in a melted state may be put in by a supply port 123a and impregnated into the fiber bundle 11.

In the embodiment shown in Fig. 1, a resin structure 13 is obtained in which the molten product is impregnated into and coated on the carbon fiber. Finally, the strand-shaped resin structure 13 is cut to obtain the liquid crystal polyester resin pellets 15 containing the thermoplastic resin comprising the liquid crystal polyester and the fibrous filler.

The heating temperature in the impregnation part 123 is appropriately determined according to the type of the liquid crystal polyester and is preferably set to be a temperature higher than the flow starting temperature of the liquid crystal polyester used by 10°C to 80°C, for example, set to 300°C to 400°C.

In the impregnation part 123, depending on characteristics and the like required for the liquid crystal polyester resin molded article, the fiber roving is impregnated with 1 part by mass to 120 parts by mass, preferably 2 to 100 parts by mass, and more preferably 5 to 80 parts by mass with respect to 100 parts by mass of the liquid crystal polyester. When the blending amount of the fiber roving is equal to or greater than the lower limit value of the above-described preferred range, by covering the fiber roving with the liquid crystal polyester, fiber breakage due to friction can be suppressed, and productivity is improved. On the other hand, in a case of being equal to or smaller than the upper limit value of the above-described preferred range, the fiber bundle is easily opened and impregnation is improved.

In the cooling part 125, the resin structure 13 heated in the impregnation part 123 is cooled to, for example, 200°C. The cooling time is not particularly limited, but is, for example, 5 seconds to 1 minute.

In the haul-off part 127, the resin structure 13 cooled in the cooling part 125 is continuously picked up and fed to the next cut part 129.

In the cut part 129, the resin structure 13 after cooling is cut to a desired length to produce the liquid crystal polyester resin pellets 15. The cut part 129 includes, for example, a rotary blade or the like.

As the liquid crystal polyester resin pellets used for molding the liquid crystal polyester resin molded article of the present embodiment using the above-described production equipment 100, for example, pellets in which the fibrous filler is hardened with the above-described thermoplastic resin comprising the liquid crystal polyester are produced as follows.

<Step of Obtaining Resin Structure>

First, the fiber bundle 11 is preheated and dried in the preheating part 121 while continuously feeding out the fiber bundle 11 from the fiber roving 10.

Next, in the impregnation part 123, the molten product of the resin material M is impregnated into the fiber bundle 11 after drying. As a result, the resin structure 13 in which the above-described molten product is impregnated into and coated with the fiber bundle 11 is obtained. After that, the resin structure 13 heated in the impregnation part 123 is cooled in the cooling part 125.

In the resin structure 13 obtained here, the fiber bundles 11 are arranged substantially in parallel to the longitudinal direction of the strand-shaped resin structure 13.

Here, "arranged substantially in parallel" refers to a state in which a long axis of the fibrous filler and a long axis of the liquid crystal polyester resin pellet are oriented in the same direction, and a deviation of angles between the axes is preferably equal to or smaller than 20°, more preferably equal to or smaller than 10°, and even more preferably equal to or smaller than 5°. That is, the deviation of angles between the axes is preferably equal to or greater than 0° and equal to or smaller than 20°, more preferably equal to or greater than 0° and equal to or smaller than 10°, and even more preferably equal to or greater than 0° and equal to or smaller than 5°.

<Step of Obtaining Pellets>

Next, the strand-shaped resin structure 13 after cooling is picked up in the haul-off part 127 and fed out to the cut part 129. Next, in the cut part 129, the resin structure 13 is cut to a predetermined length in the longitudinal direction thereof to obtain the liquid crystal polyester resin pellets 15.

In the liquid crystal polyester resin pellets 15, the fibrous filler is hardened with the thermoplastic resin comprising the liquid crystal polyester, and the fibrous fillers are arranged substantially in parallel to the longitudinal direction of the pellets, that is, the fibrous fillers are arranged in one direction. In addition, the length-weighted average fiber length of the fibrous filler in the liquid crystal polyester resin pellets 15 is substantially the same as the length of the liquid crystal polyester resin pellets 15. The length of the liquid crystal polyester resin pellets 15 produced in the present embodiment depends on required performance of the molded article using the liquid crystal polyester resin pellets 15 as a molding material, but for example, is equal to or greater than 4 mm and smaller than 50 mm, and may be 6 to 25 mm or 7 to 20 mm.

Here, the "length-weighted average fiber length is substantially the same as the length of the liquid crystal polyester resin pellets 15" refers to that the fibrous filler is not cut inside the liquid crystal polyester resin pellets 15, or the fibrous filler significantly shorter than the total length of the liquid crystal polyester resin pellets 15 is not substantially included, and for example, it refers to that the number of fibrous fillers shorter than 95% of the total length of the pellets in the liquid crystal polyester resin pellets is smaller than 10% of the total number of fibrous fillers included in the pellets. The total length of the pellets are a length of the fibrous filler in the pellet in the orientation direction. Since the fibrous filler has substantially the same length as the liquid crystal polyester resin pellets, the length-weighted average fiber length of the fibrous filler in the molded article can be lengthened, and the effect of the invention can be obtained.

By setting the length-weighted average fiber length of the fibrous filler in the liquid crystal polyester resin pellets to equal to or greater than 4 mm and smaller than 50 mm, when the liquid crystal polyester resin pellets are injection-molded, the length-weighted average fiber length of the fibrous filler in the liquid crystal polyester resin molded article can be easily adjusted to equal to or greater than 0.7 mm.

(Method for Producing Liquid Crystal Polyester Resin Molded Article)

The liquid crystal polyester resin molded article of the present embodiment can be molded by a known molding method using the above-described liquid crystal polyester resin pellets. As a method for molding the molded article of the present embodiment, a melt molding method is preferable, and examples thereof include injection molding methods, extrusion molding methods such as a T-die method or an inflation method, compression molding methods, blow molding methods, vacuum molding methods, and press molding. Among these, an injection molding method is preferable.

For example, when the above-described liquid crystal polyester resin pellets are used as a molding material and molded by an injection molding method, the liquid crystal polyester resin pellets are melted using a known injection molding machine and the melted liquid crystal polyester resin composition is molded by injection into a mold.

Examples of the known injection molding machine include TR450EH3 manufactured by Sodick Co., Ltd. and a PS40E5ASE model hydraulic horizontal molding machine manufactured by Nissei Plastic Industrial Co., Ltd. Examples of the type of the injection molding machine include an in-line type injection molding machine with integrated pellets plasticization part and injection part, and a pre-plasticating type injection molding machine with independent pellets plasticization part and injection part. A pre-plasticating type injection molding machine is preferable because there is no check valve and the injection pressure can be reduced. Examples of the pre-plasticating type injection molding machine include TR450EH3 manufactured by Sodick Co., Ltd.

A cylinder temperature of the injection molding machine is appropriately determined according to the type of the liquid crystal polyester and is preferably set to be a temperature higher than the flow starting temperature of the liquid crystal polyester used by 10°C to 80°C, for example, set to 300°C to 400°C.

From the viewpoint of cooling speed and productivity of the liquid crystal polyester resin composition, a temperature of the mold is preferably set in a range of room temperature (for example, 23°C) to 180°C.

Since the liquid crystal polyester resin molded article of the present embodiment has a small notch sensitivity applied, a degree of freedom in design can be ensured.

The above-described molded article of the present embodiment be applied to any application to which the liquid crystal polyester resin is applicable in general and is particularly suitable for applications in the automotive field.

Examples of applications in the automotive field include, as an injection-molded article for automobile interior materials, injection-molded bodies for ceiling materials, injection-molded bodies for wheelhouse covers, injection-molded bodies for trunk compartment linings, injection-molded bodies for instrument panel surface materials, injection-molded bodies for steering wheel covers, injection-molded bodies for armrests, injection-molded bodies for headrests, injection-molded bodies for seat belt covers, injection-molded bodies for shift lever boots, injection-molded bodies for console boxes, injection-molded bodies for horn pads, injection-molded bodies for knobs, injection-molded bodies for airbag covers, injection-molded bodies for various trims, injection-molded bodies for various pillars, injection-molded bodies for door lock bezels, injection-molded bodies for grab boxes, injection-molded bodies for defroster nozzles, injection-molded bodies for scuff plates, injection-molded bodies for steering wheels, and injection-molded bodies for steering column covers.

In addition, examples of applications in the automotive field include, as an injection-molded article for automobile exterior materials, injection-molded bodies for bumpers, injection-molded bodies for spoilers, injection-molded bodies for mudguards, injection-molded bodies for side moldings, injection-molded bodies for radiator grills, injection-molded bodies for wheel covers, injection-molded bodies for wheel caps, injection-molded bodies for cowl belts and grills, injection-molded bodies for air outlets and louvers, injection-molded bodies for air scoops, injection-molded bodies for hood bulges, injection-molded bodies for fenders, and injection-molded bodies for back doors.

Examples thereof include, as a part in the engine room for automobiles, injection-molded bodies for cylinders and head covers, injection-molded bodies for engine mounts, injection-molded bodies for air intake manifolds, injection-molded bodies for throttle bodies, injection-molded bodies for air intake pipes, injection-molded bodies for radiator tanks, injection-molded bodies for radiator support, injection-molded bodies for water pump and inlet, injection-molded bodies for water pump and outlet, injection-molded bodies for thermostat housing, injection-molded bodies for cooling fan, injection-molded bodies for fan shroud, injection-molded bodies for oil pan, injection-molded bodies for oil filter housing, injection-molded bodies for oil filler cap, injection-molded bodies for oil level gauge, injection-molded bodies for timing belt, injection-molded bodies for timing belt cover, and injection-molded bodies for engine covers.

Examples thereof include, as a fuel component for automobiles, fuel caps, fuel filler tubes, automotive fuel tanks, fuel sender modules, fuel cutoff valves, quick connectors, canisters, fuel delivery pipes, and fuel filler necks.

Examples thereof include, as a drive train component for automobiles, shift lever housing and propeller shaft.

Examples thereof include, as a part of chassis for automobiles, stabilizer and linkage rod.

Examples of other injection-molded bodies for automobile parts include injection-molded bodies for automobile headlamps, injection-molded bodies for glass run channels, injection-molded bodies for weather strips, injection-molded bodies for hoses such as injection-molded bodies for drain hoses and injection-molded bodies for windshield washer tubes, injection-molded bodies for tubes, injection-molded bodies for rack and pinion boots, and injection-molded bodies for gaskets.

In addition, in addition to the above, it is also possible to apply the molded article of the present embodiment to applications such as sensors, LED lamps, connectors, sockets, resistors, relay cases, switches, coil bobbins, capacitors, variable condenser cases, optical pickups, oscillators, various terminal boards, transformers, plugs, printed circuit boards, tuners, speakers, microphones, headphones, small motors, magnetic head bases, power modules, semiconductors, liquid crystal displays, FDD carriages, FDD chassis, motor brush holders, parabolic antennas, computer related parts, microwave oven parts, sound and voice equipment parts, lighting parts, air conditioner parts, office computer related parts, telephone and fax-related parts, and copier-related parts.

The liquid crystal polyester resin of the present invention can be provided in the form of pellets.

Such liquid crystal polyester resin pellets (I) contain:

a thermoplastic resin comprising a liquid crystal polyester; and
a fibrous filler,
in which the proportion of the liquid crystal polyester with respect to 100 mass% of the thermoplastic resin is equal to or greater than 80 mass% and equal to or smaller than 100 mass%,
the fibrous filler is contained in an amount of equal to or greater than 1 part by mass and equal to or smaller than 120 parts by mass with respect to 100 parts by mass of the thermoplastic resin,
a length-weighted average fiber length of the fibrous filler is equal to or greater than 4 mm and smaller than 50 mm, and
the fibrous filler is carbon fiber.

In the liquid crystal polyester resin pellets (II)

the proportion of the liquid crystal polyester with respect to 100 mass% of the thermoplastic resin is preferably equal to or smaller than 90 mass%, and
the proportion of a thermoplastic resin other than the liquid crystal polyester with respect to 100 mass% of the thermoplastic resin is equal to or greater than 10 mass% and equal to or smaller than 25 mass%.

Preferably, the liquid crystal polyester resin pellets (III) contain:

a thermoplastic resin comprising a liquid crystal polyester; and
a fibrous filler,
in which the proportion of the liquid crystal polyester with respect to 100 mass% of the thermoplastic resin is equal to or greater than 80 mass% and equal to or smaller than 90 mass%,
the proportion of a thermoplastic resin other than the liquid crystal polyester with respect to 100 mass% of the thermoplastic resin is equal to or greater than 10 mass% and equal to or smaller than 25 mass%,
the fibrous filler is contained in an amount of equal to or greater than 1 part by mass and equal to or smaller than 120 parts by mass with respect to 100 parts by mass of the thermoplastic resin,
a length-weighted average fiber length of the fibrous filler is equal to or greater than 4 mm and smaller than 50 mm, and
the fibrous filler is glass fiber.

Preferably in the pellets (II) or (III),
the thermoplastic resin other than the liquid crystal polyester is at least one selected from the group consisting of a polyolefin-based resin, a vinyl-based resin, a polystyrene-based resin, a polyamide-based resin, a polyester-based resin other than the liquid crystal polyester, a polysulfone-based resin, a polyphenylene sulfide-based resin, a polyetherketone-based resin, a polyimide-based resin, a polycarbonate resin, and a polyphenylene ether resin.

Preferably, the fibrous fillers are arranged in one direction, and
the fiber length of the fibrous filler is substantially the same as the length of the liquid crystal polyester resin pellets.

In the liquid crystal polyester resin pellets,

in which the liquid crystal polyester comprises a repeating unit represented by Formula (1), (2), or (3),
the amount the repeating unit represented by Formula (1) is equal to or greater than 30 mol% and equal to or smaller than 100 mol% with respect to the total amount of the repeating units represented by Formulae (1), (2), and (3), preferably equal to or greater than 30 mol% and equal to or smaller than 90 mol%, more preferably equal to or greater than 40 mol% and equal to or smaller than 80 mol%, even more preferably equal to or greater than 45 mol% and equal to or smaller than 80 mol%, still more preferably equal to or greater than 50 mol% and equal to or smaller than 70 mol%, and even still more preferably equal to or greater than 50 mol% and equal to or smaller than 65 mol%,

the amount the repeating unit represented by Formula (2) is equal to or greater than 0 mol% and equal to or smaller than 35 mol% with respect to the total amount of the repeating units represented by Formulae (1), (2), and (3), preferably equal to or greater than 5 mol% and equal to or smaller than 35 mol%, more preferably equal to or greater than 10 mol% and equal to or smaller than 35 mol%, even more preferably equal to or greater than 15 mol% and equal to or smaller than 30 mol%, still more preferably equal to or greater than 17.5 mol% and equal to or smaller than 27.5 mol%, and even still more preferably equal to or greater than 17.5 mol% and equal to or smaller than 25 mol%, and

the amount the repeating unit represented by Formula (3) is equal to or greater than 0 mol% and equal to or smaller than 35 mol% with respect to the total amount of the repeating units represented by Formulae (1), (2), and (3), preferably equal to or greater than 5 mol% and equal to or smaller than 35 mol%, more preferably equal to or greater than 10 mol% and equal to or smaller than 35 mol%, even more preferably equal to or greater than 15 mol% and equal to or smaller than 30 mol%, still more preferably equal to or greater than 17.5 mol% and equal to or smaller than 27.5 mol%, and even still more preferably equal to or greater than 17.5 mol% and equal to or smaller than 25 mol%.

However, the total amount of the repeating units represented by Formulae (1), (2), and (3) does not exceed 100 mol%.

(1) $-O-Ar^1-CO-$
(2) $-CO-Ar^2-CO-$
(3) $-X-Ar^3-Y-$
(In Formulae (1) to (3), $Ar^1$ represents a phenylene group, a naphthylene group, or a biphenylylene group, $Ar^2$ and $Ar^3$ each independently represent a phenylene group, a naphthylene group, a biphenylene group, or a group represented by Formula (4), X and Y each independently represent an oxygen atom or an imino group, and hydrogen atoms in the group represented by $Ar^1$, $Ar^2$, or $Ar^3$ may be each independently substituted with a halogen atom, an alkyl group, or an aryl group.)
(4) $-Ar^4-Z-Ar^5-$
(In Formula (4), $Ar^4$ and $Ar^5$ each independently represent a phenylene group or a naphthylene group, and Z represents an oxygen atom, a sulfur atom, a carbonyl group, a sulfonyl group, or an alkylidene group.)

In the liquid crystal polyester resin pellets
a Charpy impact strength Ea of a notched specimen having a 45° V-shaped groove with a depth of 2 mm in a center of a length of 80 mm, a width of 10 mm, and a height of 4 mm, which is produced using the liquid crystal polyester resin pellets, and a Unnotched Charpy impact strength Eb of a specimen with a length of 80 mm, a width of 10 mm, and a height of 4 mm preferably satisfies Expression (5),

$$1 - (Ea / Eb) \leq 0.4 \quad \cdots (5).$$

In the liquid crystal polyester resin pellets
the proportion of the thermoplastic resin is equal to or greater than 1 mass% and equal to or smaller than 54.5 mass% with respect to 100 mass% of the liquid crystal polyester resin pellets, preferably equal to or greater than 1 mass% and equal to or smaller than 53.5 mass%, more preferably equal to or greater than 9.1 mass% and equal to or smaller than 53.5 mass%, even more preferably equal to or greater than 16.7 mass% and equal to or smaller than 52.4 mass%, and still more preferably equal to or greater than 16.7 mass% and equal to or smaller than 50.0 mass%.
In the liquid crystal polyester resin pellets
the proportion of the fibrous filler is equal to or greater than 1 part by mass and equal to or smaller than 115 parts by mass with respect to 100 parts by mass of the thermoplastic resin, preferably equal to or greater than 10 parts by mass and equal to or smaller than 115 parts by mass, more preferably equal to or greater than 20 parts by mass and equal to or smaller than 110 parts by mass, and even more preferably equal to or greater than 20 parts by mass and equal to or smaller than 100 parts by mass.
The method for producing the liquid crystal polyester resin pellets can comprise the following:

a step of impregnating a fiber bundle, which is a raw material of the fibrous filler, with the thermoplastic resin in a melted state to obtain a strand-shaped resin structure, and

a step of cutting the strand-shaped resin structure.

In the liquid crystal polyester resin molded article of the present invention,
the proportion of the liquid crystal polyester with respect to 100 mass% of the thermoplastic resin is preferably equal to or smaller than 90 mass% and more preferably equal to or greater than 85 mass% and equal to or smaller than 90 mass%.

[Examples]

Hereinafter, the present invention will be described in more detail with reference to specific examples. However, the present invention is not limited to the examples shown below.

<Production of Liquid Crystal Polyester 1>

(1) Melt Polymerization

994.5 g of p-hydroxybenzoic acid (7.2 mol), 446.9 g of 4,4'-dihydroxybiphenyl (2.4 mol), 239.2 g of terephthalic acid (1.44 mol), 159.5 g of isophthalic acid (0.96 mol), and 1347.6 g of acetic anhydride (13.2 mol) were charged in a reaction vessel equipped with a stirring device, a torque meter, a nitrogen gas introduction pipe, a thermometer, and a reflux condenser, 0.2 g of 1-methylimidazole was added thereto, and the inside of the reaction vessel was thoroughly replaced with nitrogen gas.
Then, the temperature was increased from room temperature to 150°C over 30 minutes while stirring under a nitrogen gas stream, and the temperature was maintained at 150°C and refluxed for 1 hour.
Next, 0.9 g of 1-methylimidazole was added thereto, the temperature was increased from 150°C to 320°C for 2 hours and 50 minutes while distilling byproduct acetic acid and unreacted acetic anhydride, and a prepolymer was obtained at the time point when an increase in torque was recognized as a reaction termination.

(2) Solid Phase Polymerization

The prepolymer thus obtained was cooled to room temperature and pulverized with a coarse pulverizer to obtain a prepolymer powder. In a nitrogen atmosphere, the prepolymer powder was heated from room temperature to 220°C over 1 hour, heated from 220°C to 240°C over 0.5 hours, and held at 240°C for 10 hours to perform a solid phase polymerization. After the solid phase polymerization, a powder-like liquid crystal polyester 1 was obtained by cooling.
With respect to a total amount of all repeating units, the liquid crystal polyester 1 had 60 mol% of the repeating unit (1) in which $Ar^1$ is a 1,4-phenylene group, 8.0 mol% of the repeating unit (2) in which $Ar^2$ is a 1,3-phenylene group, 12 mol% of the repeating unit (2) in which $Ar^2$ is a 1,4-phenylene group, and 20.0 mol% of the repeating unit (3) in which $Ar^3$ is a 4,4'-biphenylene group, and the flow starting temperature thereof was 291°C.

<Production of Liquid Crystal Polyester 2>

(1) Melt Polymerization

1034.99 g of 6-hydroxy-2-naphthoic acid (5.5 mol), 378.33 g of 2,6-naphthalenedicarboxylic acid (1.75 mol), 83.07 g of terephthalic acid (0.5 mol), 272.52 g of hydroquinone (2.475 mol; 0.225 mol excess with respect to the total amount of 2,6-naphthalenedicarboxylic acid and terephthalic acid), 1226.87 g of acetic anhydride (12 mol), and 0.17 g 1-methylimidazole as a catalyst were placed in a reaction vessel equipped with a stirring device, a torque meter, a nitrogen gas introduction pipe, a thermometer, and a reflux condenser, the gas in the reactor was replaced with nitrogen gas, and then the temperature was increased from room temperature to 145°C over 15 minutes while stirring under a nitrogen gas stream and refluxing was carried out at 145°C for 1 hour.
Next, while distilling off byproduct acetic acid and unreacted acetic anhydride, the temperature was increased from 145°C to 310°C over 3 hours and 30 minutes and maintained at 310°C for 3 hours, and then the resultant was extracted from the reaction vessel and cooled to room temperature. The obtained solid matter was pulverized with a pulverizer to a particle size of approximately 0.1 to 1 mm to obtain a prepolymer powder.

(2) Solid Phase Polymerization

In a nitrogen atmosphere, the prepolymer powder was heated from room temperature to 250°C over 1 hour, heated from 250°C to 310°C over 10 hours, and held at 310°C for 5 hours to perform a solid phase polymerization. After the solid phase polymerization, a powder-like liquid crystal polyester 2 was obtained by cooling.

With respect to a total amount of all repeating units, the liquid crystal polyester 2 had 55 mol% of the repeating unit (1) in which $Ar^1$ is a 2,6-naphthylene group, 17.5 mol% of the repeating unit (2) in which $Ar^2$ is a 2,6-naphthylene group, 5 mol% of the repeating unit (2) in which $Ar^2$ is a 1,4-phenylene group, and 22.5 mol% of the repeating unit (3) in which $Ar^3$ is a 1,4-phenylene group, and the flow starting temperature thereof was 333°C.

<Production of Liquid Crystal Polyester 3>

(1) Melt Polymerization

Using a 3 liter four-necked separable flask including a Dimroth condenser tube, a distilling head including a nitrogen introducing tube and a thermocouple for the measurement of an inner temperature attached thereto, and an anchor-shaped stirrer, and also including a thermocouple fit on the outside of the flask, 1207.3 g (8.74 mol) of 4-hydroxybenzoic acid, 608.4 g (3.23 mol) of 6-hydroxy-2-naphthoic acid, and 1345 g (13.2 mol) of acetic anhydride were charged into a polymerization tank. Under a nitrogen gas flow, the outer temperature of the flask was increased to 150°C by a mantle heater, and then an acetylation reaction was performed under reflux for approximately 3 hours while stirring at 200 rpm.

Following the acetylation reaction, the temperature was increased at 1 °C/min and maintained at 310°C to perform a melt polycondensation. During this reaction, acetic acid produced as a by-product in the polycondensation reaction was continuously distilled off. Sampling was performed 30 minutes after reaching 310°C during the polymerization, and the flow starting temperature was measured and found to be 230°C. After 35 minutes from reaching 230°C, stirring was stopped and the polymer could be easily taken out in a melted state. There was almost no adhesion to the polymerization tank and the stirring blade. The resulting prepolymer was cooled and solidified after a while. The yield was 1565 g (97.8% of the theoretical yield). The obtained prepolymer was made into a size of approximately 3 to 5 cm square, and then after pulverizing to an average particle size of 1 mm or less using a pulverizer, the flow starting temperature was measured and found to be 239°C. This prepolymer exhibited optical anisotropy in a case of being melted.

(2) Solid Phase Polymerization

The prepolymer was placed in an aluminum tray, charged in a nitrogen atmosphere furnace, and under a nitrogen atmosphere, heated from room temperature to 180°C for 3 hours and maintained at 180°C for 2 hours. Thereafter, the temperature was increased to 270°C over approximately 7.5 hours, maintained at 270°C for 5 hours, and then the resultant was allowed to cool and taken out to obtain a powder of Liquid crystal polyester 3 (advanced polymer). The weight loss here was 1.5 wt%.

With respect to a total amount of all repeating units, the liquid crystal polyester 3 had 73 mol% of the repeating unit (1) in which $Ar^1$ is a 1,4-phenylene group and 27 mol% of the repeating unit (1) in which $Ar^1$ is a 2,6-naphthalene group, and the flow starting temperature thereof was 287°C.

[Flow starting temperature of Liquid Crystal Polyester]

First, using a flow tester ("CFT-500 type" manufactured by Shimadzu Corporation), approximately 2 g of a liquid crystal polyester was filled into a cylinder equipped with a die having a nozzle with an inner diameter of 1 mm and a length of 10 mm. Next, the liquid crystal polyester was melted and extruded from the nozzle while the temperature was increased at a rate of 4°C/min under a load of 9.8 MPa (100 kg/cm$^2$) to measure a temperature (flow starting temperature) indicating a viscosity of 4,800 Pa·s (48,000 poise), and the temperature was used as a flow starting temperature of the liquid crystal polyester.

<Method for Measuring Length-weighted Average Fiber Length>

The length-weighted average fiber length of the fibrous filler in a resin pellets and an unnotched specimen (that is, a molded article) was measured by the following measuring method.

(1) First, as a test sample, an unnotched specimen, having a central portion length width 10 mm × length 20 mm × thickness 4 mm, was cut out. In addition, approximately 5 resin pellets were selected. The test sample was sintered in a muffle furnace to remove a resin component. Here, when the fibrous filler was carbon fiber, firing conditions were 500°C and 3 hours. When the fibrous filler was glass fiber, firing conditions were 600°C and 4 hours.

(2) A fibrous filler dispersion liquid was produced by dispersing only the fibrous filler in 500 mL of an aqueous solution containing 0.05 volume% of a surfactant (Micro90 manufactured by INTERNATIONAL PRODUCTS CORPORATION).

(3) A part of the dispersion liquid was taken out, fibers were observed with a microscope (VH-ZST manufactured by KEYENCE CORPORATION) at a magnification of 20 times, and 5 images per sample were captured. Here, when the fibrous filler was carbon fiber, 50 mL was extracted from a 500 mL dispersion liquid and filtered under reduced pressure using Kiriyama filter paper (No. 5C) with a 90 mm diameter, and images of the carbon fiber dispersed on the filter paper were captured. When the fibrous filler was glass fiber, 50 mL was extracted from a 500 mL dispersion liquid and dispersed in a Petri dish, and images of the glass fiber dispersed in the Petri dish was captured.

(4) A fiber length of all 5 captured images was measured using image processing software (WinROOF2018 manufactured by MITANI CORPORATION) as follows.

(Method for Measuring Fiber Length)

(a) A monochrome pixel conversion processing was performed on the captured images.

(b) A binarization processing was performed so that the captured fibers were colored.

(c) A measurement of the fiber length was performed using needle-shaped separation function of the image processing software.

(d) The fiber length of the fiber which could not be binarized in (c) or the fiber length of a curved fiber was measured by multi-point measurement, and a fiber in contact with an edge of the image was not measured.

However, in (c) and (d), fibers of 10 $\mu$m or less were judged to be noise and were not included in the measured number of fibers n. When n > 500, that is, the number n of fibers to be measured did not exceed 500, the process returned to (3), additional images are captured, and the measurement was performed until n exceeds 500.

(5) From the fiber length of the fibrous filler in the 5 images, the length-weighted average fiber length lm = ($\Sigma$li$^2$ $\times$ ni) / ($\Sigma$li $\times$ ni) was determined ($\Sigma$ni > 500).

li: fiber length of fibrous filler
ni: number of fibrous fillers with fiber length li

<Proportion of Fibrous Filler having Fiber Length of equal to or greater than 1 mm>

The proportion (%) of fibers having a fiber length of equal to or greater than 1 mm, obtained from a calculation expression [number of fibers of equal to or greater than 1 mm / total number of fibers $\times$ 100] in a case of measuring the length-weighted average fiber length, was obtained.

(Example 1)

<Production of Liquid Crystal Polyester Resin Pellets>

Using a production equipment having a form shown in Fig. 1, liquid crystal polyester resin pellets 15 were obtained as follows. A GTS-40 type extruder (manufactured by PLABOR Research Laboratory of Plastics Technology Co., Ltd.) was used as an extruder. An EBD-1500A (manufactured by IMEX Corporation) was used as a belt haul-off machine.

· Step of Obtaining Resin Structure

By operating the belt haul-off machine (haul-off part 127) at a haul-off speed of 10 m/min, carbon fibers (manufactured by Mitsubishi Chemical Co., Ltd., Pyrofil (registered trademark) CF tow, TR50S15L, PAN-based carbon fiber, tensile strength: 4,900 MPa, tensile elongation: 2.1%, number-average fiber diameter: 7 $\mu$m) were continuously fed from a fiber roving 10 as a fiber bundle 11 at a haul-off speed of 10 m/min, and first heated to 200°C and dried in a preheating part 121.

Separately, using the above-described extruder, the liquid crystal polyester 1 obtained in the above <Production of Liquid Crystal Polyester 1> was heated to 360°C to prepare a melted state.

Next, while supplying the dried fibers 11 to a die (impregnation part 123) fit on a tip of the extruder, the molten liquid crystal polyester 1 (resin material M) was put in by the extruder from a supply port 123a. In the die (impregnation part 123), the liquid crystal polyester 1 was melted at 360°C, and the carbon fiber were impregnated with the liquid crystal polyester 1. The impregnation amount of the liquid crystal polyester 1 was adjusted by changing the size of the hole diameter at the outlet of the impregnation die. By impregnating 100 parts by mass of the liquid crystal polyester 1 with 25 parts by mass of the carbon fiber, a resin structure 13 in which the carbon fibers were arranged substantially in parallel to a longitudinal direction of the liquid crystal polyester resin layer was obtained.

Thereafter, the resin structure 13 in a heated state in the die (impregnation part 123) was cooled to 150°C or lower by a cooling part 125.

· Step of Obtaining Pellets

Next, the cooled strand-shaped resin structure 13 was continuously picked up by the belt haul-off machine (haul-off part 127) at a haul-off speed of 10 m/min, fed to a pelletizer (cut part 129), cut to a length of 12 mm in the longitudinal direction thereof to obtain liquid crystal polyester resin pellets 15 of Example 1, having a cylindrical shape (length: 12 mm). The length-weighted average fiber length of the fibrous filler (carbon fiber) was 12 mm.

<Production of unnotched Specimen >

The liquid crystal polyester resin pellets of Example 1 were put into an injection molding machine TR450EH3 (manufactured by Sodick Co., Ltd.) having a molding temperature of 360°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the molded article. The length-weighted average fiber length of the fibrous filler (carbon fiber) in the unnotched specimen was 3.26 mm. The proportion of the fibrous filler having a fiber length of equal to or greater than 1 mm with respect to 100% of the fibrous filler (carbon fiber) in the unnotched specimen was 53%.

[Charpy Impact Strength of unnotched Specimen]

Using the unnotched specimen, having a width of 10 mm, a length of 80 mm, and a thickness of 4 mm, a Charpy impact test was performed using hammers 2.0J and 4.0J in accordance with ISO179-1 and JIS K 7111-1. For a Charpy impact strength of the unnotched specimen, an average value of 5 measurements was adopted. These results are shown in Table 1.

(Examples 2 to 4)

Liquid crystal polyester resin pellets 15 of Examples 2 to 4 having a cylindrical shape (length: 12 mm) were obtained in the same manner as in Example 1, except that the 25 parts by mass of the fiber 11 in Example 1 was changed to each blending amount shown in Table 1 by changing the size of the hole diameter at the outlet of the die (impregnation part 123). The length-weighted average fiber length of the fibrous filler (carbon fiber) was 12 mm (Examples 2 to 4).

<Production of unnotched Specimen>

An unnotched specimen, having a width of 10 mm, a length of 80 mm, and a thickness of 4 mm, was produced in the same manner as in Example 1 using the liquid crystal polyester resin pellets of Examples 2 to 4. In addition, the Charpy impact test was performed in the same manner as in Example 1. The results of the length-weighted average fiber length of the fibrous filler in the unnotched specimen, the proportion of the fibrous filler having a fiber length of equal to or greater than 1 mm with respect to 100% of the fibrous filler in the unnotched specimen, the Charpy impact strength are shown in Table 1.

(Examples 5 to 8)

Liquid crystal polyester resin pellets 15 of Examples 5 to 8 having a cylindrical shape (length: 12 mm) were obtained in the same manner as in Example 1, except that the 25 parts by mass of the carbon fiber in Example 1 was changed to glass fiber of each blending amount shown in Table 1 (manufactured by Nitto Boseki Co., Ltd., RS110QL483AC, E-glass, number-average fiber diameter: 17 μm). The length-weighted average fiber length of the fibrous filler (glass fiber) was 12 mm (Examples 5 to 8).

<Production of unnotched Specimen>

An unnotched specimen, having a width of 10 mm, a length of 80 mm, and a thickness of 4 mm, was produced in the same manner as in Example 1 using the liquid crystal polyester resin pellets of Examples 5 to 8. In addition, the Charpy impact test was performed in the same manner as in Example 1. The results of the length-weighted average fiber length of the fibrous filler in the unnotched specimen, the proportion of the fibrous filler having a fiber length of equal to or greater than 1 mm with respect to 100% of the fibrous filler in the unnotched specimen, the Charpy impact strength are shown in Table 1.

(Example 9)

Using the above-described extruder, the liquid crystal polyester 2 obtained in the above <Production of Liquid Crystal Polyester 2> was heated to 380°C to prepare a melted state.

Next, as in Example 1, while supplying, as the fiber 11, dried carbon fiber (manufactured by Mitsubishi Chemical Co., Ltd., Pyrofil (registered trademark) CF tow, TR50S15L, PAN-based carbon fiber, tensile strength: 4,900 MPa, tensile elongation: 2.1%, number-average fiber diameter: 7 $\mu$m) to the die (impregnation part 123) fit on a tip of the extruder, the molten liquid crystal polyester 2 (resin material M) was put in by the extruder from a supply port 123a. The liquid crystal polyester 2 was melted in the die (impregnation part 123) at 380°C, and by impregnating 100 parts by mass of the liquid crystal polyester 2 with 67 parts by mass of the carbon fiber, a resin structure 13 in which the carbon fibers were arranged substantially in parallel to a longitudinal direction of the liquid crystal polyester resin layer was obtained.

Thereafter, the resin structure 13 in a heated state in the die (impregnation part 123) was cooled to 150°C or lower by a cooling part 125.

Next, the cooled resin structure 13 was continuously picked up by the belt haul-off machine (haul-off part 127) at a haul-off speed of 10 m/min, fed to a pelletizer (cut part 129), cut to a length of 12 mm in the longitudinal direction thereof to obtain liquid crystal polyester resin pellets 15 of Example 9, having a cylindrical shape (length: 12 mm). The length-weighted average fiber length of the fibrous filler (carbon fiber) was 12 mm (Example 9).

<Production of unnotched Specimen>

The liquid crystal polyester resin pellets 15 of Example 9 were put into an injection molding machine TR450EH3 (manufactured by Sodick Co., Ltd.) having a molding temperature of 380°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the specimen. In addition, the Charpy impact test was performed in the same manner as in Example 1. The results of the length-weighted average fiber length of the fibrous filler in the unnotched specimen, the proportion of the fibrous filler having a fiber length of equal to or greater than 1 mm with respect to 100% of the fibrous filler in the unnotched specimen, the Charpy impact strength are shown in Table 1.

(Example 10)

Liquid crystal polyester resin pellets 15 of Example 10 having a cylindrical shape (length: 12 mm) were obtained in the same manner as in Example 9, except that the 67 parts by mass of the carbon fiber in Example 9 was changed to 67 parts by mass of glass fiber (manufactured by Nitto Boseki Co., Ltd., RS110QL483AC, E-glass, number-average fiber diameter: 17 $\mu$m). The length-weighted average fiber length of the fibrous filler (glass fiber) was 12 mm (Example 10).

<Production of unnotched Specimen>

An unnotched specimen, having a width of 10 mm, a length of 80 mm, and a thickness of 4 mm, was produced in the same manner as in Example 9 using the liquid crystal polyester resin pellets 15 of Example 10. In addition, the Charpy impact test was performed in the same manner as in Example 1. The results of the length-weighted average fiber length of the fibrous filler in the unnotched specimen, the proportion of the fibrous filler having a fiber length of equal to or greater than 1 mm with respect to 100% of the fibrous filler in the unnotched specimen, the Charpy impact strength are shown in Table 2.

(Example 11)

Using the above-described extruder, the liquid crystal polyester 3 obtained in the above <Production of Liquid Crystal Polyester 3> was heated to 340°C to prepare a melted state.

Next, as in Example 1, while supplying, as the fiber 11, dried carbon fiber (manufactured by Mitsubishi Chemical Co., Ltd., Pyrofil (registered trademark) CF tow, TR50S15L, PAN-based carbon fiber, tensile strength: 4,900 MPa, tensile elongation: 2.1%, number-average fiber diameter: 7 $\mu$m) to the die (impregnation part 123) fit on a tip of the extruder, the molten liquid crystal polyester 3 (resin material M) was put in by the extruder from a supply port 123a. The liquid crystal polyester 3 was melted in the die (impregnation part 123) at 340°C, and by impregnating 100 parts by mass of the liquid crystal polyester 3 with 67 parts by mass of the carbon fiber, a resin structure 13 in which the carbon fibers were arranged substantially in parallel to a longitudinal direction of the liquid crystal polyester resin layer was obtained.

Thereafter, the resin structure 13 in a heated state in the die (impregnation part 123) was cooled to 150°C or lower by a cooling part 125.

Next, the cooled resin structure 13 was continuously picked up by the belt haul-off machine (haul-off part 127) at a haul-off speed of 10 m/min, fed to a pelletizer (cut part 129), cut to a length of 12 mm in the longitudinal direction thereof to obtain liquid crystal polyester resin pellets 15 of Example 11, having a cylindrical shape (length: 12 mm). The length-weighted average fiber length of the fibrous filler (carbon fiber) was 12 mm (Example 11).

<Production of unnotched Specimen>

The liquid crystal polyester resin pellets 15 of Example 11 were put into an injection molding machine TR450EH3 (manufactured by Sodick Co., Ltd.) having a molding temperature of 320°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the specimen. In addition, the Charpy impact test was performed in the same manner as in Example 1. The results of the length-weighted average fiber length of the fibrous filler in the unnotched specimen, the proportion of the fibrous filler having a fiber length of equal to or greater than 1 mm with respect to 100% of the fibrous filler in the unnotched specimen, the Charpy impact strength are shown in Table 2.

(Example 12)

Liquid crystal polyester resin pellets 15 of Example 12 having a cylindrical shape (length: 12 mm) were obtained in the same manner as in Example 11, except that the 67 parts by mass of the carbon fiber in Example 11 was changed to 67 parts by mass of glass fiber (manufactured by Nitto Boseki Co., Ltd., RS110QL483AC, E-glass, number-average fiber diameter: 17 $\mu$m). The length-weighted average fiber length of the fibrous filler (glass fiber) was 12 mm.

<Production of unnotched Specimen>

An unnotched specimen, having a width of 10 mm, a length of 80 mm, and a thickness of 4 mm, was produced in the same manner as in Example 11 using the liquid crystal polyester resin pellets 15 of Example 12. In addition, the Charpy impact test was performed in the same manner as in Example 1. The results of the length-weighted average fiber length of the fibrous filler in the unnotched specimen, the proportion of the fibrous filler having a fiber length of equal to or greater than 1 mm with respect to 100% of the fibrous filler in the unnotched specimen, the Charpy impact strength are shown in Table 2.

(Example 13) Not according to the invention

<Production of Liquid Crystal Polyester Resin Pellets>

· Step of Obtaining Resin Structure

By operating the belt haul-off machine (haul-off part 127) at a haul-off speed of 10 m/min, carbon fibers (manufactured by Mitsubishi Chemical Co., Ltd., Pyrofil (registered trademark) CF tow, TR50S15L, PAN-based carbon fiber, tensile strength: 4,900 MPa, tensile elongation: 2.1%, number-average fiber diameter: 7 $\mu$m) were continuously fed from a fiber roving 10 as a fiber bundle 11 at a haul-off speed of 10 m/min, and first heated to 200°C and dried in a preheating part 121.

Separately, using the above-described extruder, the liquid crystal polyester 1 (75 parts by mass) obtained in the above <Production of Liquid Crystal Polyester 1> and polyamide 6 (UBE INDUSTRIES, LTD., UBE Nylon (registered trademark), 1013B) (25 parts by mass) were heated to 360°C to prepare a melted state (resin material M).

Next, while supplying the dried fibers 11 to a die (impregnation part 123) fit on a tip of the extruder, the molten resin material M was put in by the extruder from a supply port 123a. In the die (impregnation part 123), the liquid crystal polyester 1 was melted at 360°C, and the carbon fiber were impregnated with the liquid crystal polyester 1. The impregnation amount of the resin material M was adjusted by changing the size of the hole diameter at the outlet of the impregnation die. By impregnating 100 parts by mass of the resin material M with 67 parts by mass of the carbon fiber, a resin structure 13 in which the carbon fibers were arranged substantially in parallel to a longitudinal direction of the liquid crystal polyester resin layer was obtained.

Thereafter, the resin structure 13 in a heated state in the die (impregnation part 123) was cooled to 150°C or lower by a cooling part 125.

· Step of Obtaining Pellets

Next, the cooled strand-shaped resin structure 13 was continuously picked up by the belt haul-off machine (haul-off part 127) at a haul-off speed of 10 m/min, fed to a pelletizer (cut part 129), cut to a length of 12 mm in the longitudinal direction thereof to obtain liquid crystal polyester resin pellets 15 of Example 13, having a cylindrical shape (length: 12 mm). The length-weighted average fiber length of the fibrous filler (carbon fiber) was 12 mm.

<Production of unnotched Specimen>

The liquid crystal polyester resin pellets 15 of Example 13 were put into an injection molding machine TR450EH3 (manufactured by Sodick Co., Ltd.) having a molding temperature of 330°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the specimen. In addition, the Charpy impact test was performed in the same manner as in Example 1. The results of the length-weighted average fiber length of the fibrous filler in the unnotched specimen, the proportion of the fibrous filler having a fiber length of equal to or greater than 1 mm with respect to 100% of the fibrous filler in the unnotched specimen, the Charpy impact strength are shown in Table 2.

(Example 14)

Liquid crystal polyester resin pellets 15 of Example 14 having a cylindrical shape (length: 12 mm) were obtained in the same manner as in Example 13, except that the liquid crystal polyester 1 (75 parts by mass) and the polyamide 6 (25 parts by mass) in Example 13 were changed to the liquid crystal polyester 1 (80 parts by mass) and the polyamide 6 (20 parts by mass). The length-weighted average fiber length of the fibrous filler (carbon fiber) was 12 mm (Example 14).

<Production of unnotched Specimen>

An unnotched specimen, having a width of 10 mm, a length of 80 mm, and a thickness of 4 mm, was produced in the same manner as in Example 13 using the liquid crystal polyester resin pellets 15 of Example 14. In addition, the Charpy impact test was performed in the same manner as in Example 13. The results of the length-weighted average fiber length of the fibrous filler in the unnotched specimen, the proportion of the fibrous filler having a fiber length of equal to or greater than 1 mm with respect to 100% of the fibrous filler in the unnotched specimen, the Charpy impact strength are shown in Table 2.

(Example 15)

Liquid crystal polyester resin pellets 15 of Example 15 having a cylindrical shape (length: 12 mm) were obtained in the same manner as in Example 13, except that the liquid crystal polyester 1 (75 parts by mass) and the polyamide 6 (25 parts by mass) in Example 13 were changed to the liquid crystal polyester 1 (90 parts by mass) and the polyamide 6 (10 parts by mass). The length-weighted average fiber length of the fibrous filler (carbon fiber) was 12 mm (Example 15).

<Production of unnotched Specimen>

An unnotched specimen, having a width of 10 mm, a length of 80 mm, and a thickness of 4 mm, was produced in the same manner as in Example 13 using the liquid crystal polyester resin pellets 15 of Example 15. In addition, the Charpy impact test was performed in the same manner as in Example 13. The results of the length-weighted average fiber length of the fibrous filler in the unnotched specimen, the proportion of the fibrous filler having a fiber length of equal to or greater than 1 mm with respect to 100% of the fibrous filler in the unnotched specimen, the Charpy impact strength are shown in Table 2.

(Examples 16 to 18) Example 16 is not according to the invention

Liquid crystal polyester resin pellets 15 of Examples 16 to 18 having a cylindrical shape (length: 12 mm) were obtained in the same manner as in Examples 13 to 15, except that the 67 parts by mass of the carbon fiber in Examples 13 to 15 was changed to glass fiber of each blending amount shown in Table 2 (manufactured by Nitto Boseki Co., Ltd., RS110QL483AC, E-glass, number-average fiber diameter: 17 $\mu$m). The length-weighted average fiber length of the fibrous filler (glass fiber) was 12 mm (Examples 16 to 18).

<Production of unnotched Specimen>

An unnotched specimen, having a width of 10 mm, a length of 80 mm, and a thickness of 4 mm, was produced in the same manner as in Example 13 using the liquid crystal polyester resin pellets of Examples 16 to 18. In addition, the Charpy impact test was performed in the same manner as in Example 13. The results of the length-weighted average fiber length of the fibrous filler in the unnotched specimen, the proportion of the fibrous filler having a fiber length of equal to or greater than 1 mm with respect to 100% of the fibrous filler in the unnotched specimen, the Charpy impact strength are shown in Table 2.

(Comparative Example 1)

The liquid crystal polyester 1 obtained in the above <Production of Liquid Crystal Polyester 1> and carbon fiber (manufactured by Mitsubishi Chemical Co., Ltd., Pyrofil CF chop, TR03M, PAN-based carbon fiber, cut length: 6 mm, tensile strength: 4,830 MPa, tensile elongation: 1.9%, number-average fiber diameter: 7 $\mu$m) were supplied to a twin-screw extruder (manufactured by Ikegai Corp., "PCM-30", cylinder temperature: 300°C) in a proportion of a blending amount of 100 parts by mass to 25 parts by mass, and after melt-kneading, liquid crystal polyester resin pellets 15 of Comparative Example 1, having a cylindrical shape (length: 3 mm) and formed a liquid crystal polyester resin composition, were produced. The length-weighted average fiber length of the fibrous filler included in the pellets was smaller than 1 mm.

<Production of unnotched Specimen>

The liquid crystal polyester resin pellets 15 of Comparative Example 1 were put into an injection molding machine TR450EH3 (manufactured by Sodick Co., Ltd.) having a molding temperature of 360°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the specimen. The length-weighted average fiber length of the fibrous filler (carbon fiber) in the unnotched specimen was 0.31 mm. The proportion of the fibrous filler having a fiber length of equal to or greater than 1 mm with respect to 100% of the fibrous filler (carbon fiber) in the unnotched specimen was 1.0%. In addition, the Charpy impact test was performed in the same manner as in Example 1. These results are shown in Table 3.

(Comparative Examples 2 to 4)

Liquid crystal polyester resin pellets 15 of Comparative Examples 2 and 3, having a cylindrical shape (length: 3 mm), were obtained in the same manner as in Comparative Example 1, except that the blending amounts of the liquid crystal polyester 1 and the carbon fiber in Comparative Example 1 were changed to each of the blending amounts shown in Table 3. However, in composition of Comparative Example 4, the composition was clogged in the twin-screw extruder, and melt kneading and granulation could not be performed. The length-weighted average fiber length of the fibrous filler included in the pellets obtained in Comparative Examples 2 and 3 was smaller than 1 mm.

<Production of unnotched Specimen>

An unnotched specimen, having a width of 10 mm, a length of 80 mm, and a thickness of 4 mm, was molded in the same manner as in Comparative Example 1 using the liquid crystal polyester resin pellets 15 of Comparative Examples 2 and 3. In addition, the Charpy impact test was performed in the same manner as in Example 1. The results of the length-weighted average fiber length of the fibrous filler in the unnotched specimen, the proportion of the fibrous filler having a fiber length of equal to or greater than 1 mm with respect to 100% of the fibrous filler in the unnotched specimen, the Charpy impact strength are shown in Table 3.

(Comparative Examples 5 to 8)

Liquid crystal polyester resin pellets 15 of Comparative Examples 5 to 8 having a cylindrical shape (length: 3 mm) were produced in the same manner as in Comparative Example 1, except that the 25 parts by mass of the carbon fiber in Comparative Example 1 was changed to glass fiber of each blending amount shown in Table 3 (manufactured by Nippon Electric Glass Co., Ltd., T747N, E-glass, cut length: 3 mm, number-average fiber diameter: 17 $\mu$m). The length-weighted average fiber length of the fibrous filler included in the pellets obtained in Comparative Examples 5 to 8 was smaller than 1 mm.

<Production of unnotched Specimen>

An unnotched specimen, having a width of 10 mm, a length of 80 mm, and a thickness of 4 mm, was molded in the same manner as in Comparative Example 1 using the liquid crystal polyester resin pellets 15 of Comparative Examples 5 to 8. In addition, the Charpy impact test was performed in the same manner as in Example 1. The results of the length-weighted average fiber length of the fibrous filler in the unnotched specimen, the proportion of the fibrous filler having a fiber length of equal to or greater than 1 mm with respect to 100% of the fibrous filler in the unnotched specimen, the Charpy impact strength are shown in Table 3.

(Comparative Example 9)

The liquid crystal polyester 2 obtained in the above <Production of Liquid Crystal Polyester 2> and carbon fiber (manufactured by Mitsubishi Chemical Co., Ltd., Pyrofil CF chop, TR03M, PAN-based carbon fiber, cut length: 6 mm, tensile strength: 4,830 MPa, tensile elongation: 1.9%, number-average fiber diameter: 7 $\mu$m) were supplied to a twin-screw extruder (manufactured by Ikegai Corp., "PCM-30", cylinder temperature: 350°C) in a proportion of the blending amount shown in Table 3, and after melt-kneading, liquid crystal polyester resin pellets 15 of Comparative Example 9, having a cylindrical shape (length: 3 mm) and formed a liquid crystal polyester resin composition, were produced. The length-weighted average fiber length of the fibrous filler included in the pellets was smaller than 1 mm.

<Production of unnotched Specimen>

The liquid crystal polyester resin pellets 15 of Comparative Example 9 were put into an injection molding machine TR450EH3 (manufactured by Sodick Co., Ltd.) having a molding temperature of 380°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the specimen. The length-weighted average fiber length of the fibrous filler (carbon fiber) in the unnotched specimen was 0.20 mm. The proportion of the fibrous filler having a fiber length of equal to or greater than 1 mm with respect to 100% of the fibrous filler (carbon fiber) in the unnotched specimen was 0.0%. In addition, the Charpy impact test was performed in the same manner as in Example 1. These results are shown in Table 3.

(Comparative Example 10)

Liquid crystal polyester resin pellets 15 of Comparative Example 10 having a cylindrical shape (length: 3 mm) were obtained in the same manner as in Comparative Example 9, except that the 67 parts by mass of the carbon fiber in Comparative Example 9 was changed to 67 parts by mass of glass fiber (manufactured by Nippon Electric Glass Co., Ltd., T747N, E-glass, cut length: 3 mm, number-average fiber diameter: 17 $\mu$m). The length-weighted average fiber length of the fibrous filler included in the pellets was smaller than 1 mm,

<Production of unnotched Specimen>

An unnotched specimen, having a width of 10 mm, a length of 80 mm, and a thickness of 4 mm, was molded in the same manner as in Comparative Example 9 using the liquid crystal polyester resin pellets 15 of Comparative Example 10. In addition, the Charpy impact test was performed in the same manner as in Example 1. The results of the length-weighted average fiber length of the fibrous filler in the unnotched specimen, the proportion of the fibrous filler having a fiber length of equal to or greater than 1 mm with respect to 100% of the fibrous filler in the unnotched specimen, the Charpy impact strength are shown in Table 3.

(Comparative Example 11)

The liquid crystal polyester 3 obtained in the above <Production of Liquid Crystal Polyester 3> and carbon fiber (manufactured by Mitsubishi Chemical Co., Ltd., Pyrofil CF chop, TR03M, PAN-based carbon fiber, cut length: 6 mm, tensile strength: 4,830 MPa, tensile elongation: 1.9%, number-average fiber diameter: 7 $\mu$m) were supplied to a twin-screw extruder (manufactured by Ikegai Corp., "PCM-30", cylinder temperature: 300°C) in a proportion of the blending amount shown in Table 4, and after melt-kneading, liquid crystal polyester resin pellets 15 of Comparative Example 11, having a cylindrical shape (length: 3 mm) and formed a liquid crystal polyester resin composition, were produced. The length-weighted average fiber length of the fibrous filler included in the pellets was smaller than 1 mm.

<Production of unnotched Specimen>

The liquid crystal polyester resin pellets 15 of Comparative Example 11 were put into an injection molding machine TR450EH3 (manufactured by Sodick Co., Ltd.) having a molding temperature of 320°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the specimen. In addition, the Charpy impact test was performed in the same manner as in Example 1. The results of the length-weighted average fiber length of the fibrous filler in the unnotched specimen, the proportion of the fibrous filler having a fiber length of equal to or greater than 1 mm with respect to 100% of the fibrous filler in the unnotched specimen, the Charpy impact strength are shown in Table 4.

(Comparative Example 12)

Liquid crystal polyester resin pellets 15 of Comparative Example 12 having a cylindrical shape (length: 3 mm) were produced in the same manner as in Comparative Example 11, except that the 67 parts by mass of the carbon fiber in Comparative Example 11 was changed to 67 parts by mass of glass fiber (manufactured by Nippon Electric Glass Co., Ltd., T747N, E-glass, cut length: 3 mm, number-average fiber diameter: 17 $\mu$m). The length-weighted average fiber length of the fibrous filler included in the pellets was smaller than 1 mm.

<Production of unnotched Specimen>

An unnotched specimen, having a width of 10 mm, a length of 80 mm, and a thickness of 4 mm, was molded in the same manner as in Comparative Example 11 using the liquid crystal polyester resin pellets of Comparative Example 12. In addition, the Charpy impact test was performed in the same manner as in Example 1. The results of the length-weighted average fiber length of the fibrous filler in the unnotched specimen, the proportion of the fibrous filler having a fiber length of equal to or greater than 1 mm with respect to 100% of the fibrous filler in the unnotched specimen, the Charpy impact strength are shown in Table 4.

(Comparative Example 13)

<Production of unnotched Specimen>

A resin pellets of carbon fiber reinforced with polypropylene (manufactured by Daicel Polymer Ltd., PLASTRON, PP-CF40-01, PP-CF 40 wt%, pellets length: 8 mm) were put into an injection molding machine TR450EH3 (manufactured by Sodick Co., Ltd.) having a molding temperature of 230°C, a multipurpose specimen (type A1) compliant with JIS K 7139 was produced by injecting into a mold with a mold temperature of 50°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the specimen. In addition, the Charpy impact test was performed in the same manner as in Example 1. The results of the length-weighted average fiber length of the fibrous filler in the unnotched specimen and the Charpy impact strength are shown in Table 4.

(Comparative Example 14)

<Production of unnotched Specimen>

A resin pellets of glass fiber reinforced with polypropylene (manufactured by Japan Polypropylene Corporation, FUNCSTER, LR24A, PP-GF 40 wt%, pellets length: 10 mm) were put into an injection molding machine TR450EH3 (manufactured by Sodick Co., Ltd.) having a molding temperature of 230°C, a multipurpose specimen (type A1) compliant with JIS K 7139 was produced by injecting into a mold with a mold temperature of 50°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the specimen. In addition, the Charpy impact test was performed in the same manner as in Example 1. The results of the length-weighted average fiber length of the fibrous filler in the unnotched specimen and the Charpy impact strength are shown in Table 4.

(Comparative Example 15)

<Production of unnotched Specimen>

A resin pellets of carbon fiber reinforced with polyamide 66 (manufactured by Daicel Polymer Ltd., PLASTRON, PA66-CF40-02, PA66-CF 40 wt%, pellets length: 9 mm) were put into an injection molding machine TR450EH3 (manufactured by Sodick Co., Ltd.) having a molding temperature of 310°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 50 MPa, and a back pressure of 0 MPa, and an unnotched specimen, having a width of 10 mm, a length of 80 mm, and a thickness of 4 mm, was cut out from the specimen. In addition, the Charpy impact test was performed in the same manner as in Example 1. The results of the length-weighted average fiber length of the fibrous filler in the unnotched specimen and the Charpy impact strength are shown in Table 4.

(Comparative Example 16)

<Production of unnotched Specimen>

A resin pellets of glass fiber reinforced with polyamide 66 (manufactured by Daicel Polymer Ltd., PLASTRON, PA66-GF50-01, PA66-GF 50 wt%, pellets length: 9 mm) were put into an injection molding machine TR450EH3 (manufactured by Sodick Co., Ltd.) having a molding temperature of 310°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the specimen. In addition, the Charpy impact test was performed in the same manner as in Example 1. The results of the length-weighted average fiber length of the fibrous filler in the unnotched specimen and the Charpy impact strength are shown in Table 4.

(Comparative Example 17)

<Production of Liquid Crystal Polyester Resin Pellets>

· Step of Obtaining Resin Structure

By operating the belt haul-off machine (haul-off part 127) at a haul-off speed of 10 m/min, carbon fibers (manufactured by Mitsubishi Chemical Co., Ltd., Pyrofil (registered trademark) CF tow, TR50S15L, PAN-based carbon fiber, tensile strength: 4,900 MPa, tensile elongation: 2.1%, number-average fiber diameter: 7 $\mu$m) were continuously fed from a fiber roving 10 as a fiber bundle 11 at a haul-off speed of 10 m/min, and first heated to 200°C and dried in a preheating part 121.
Separately, using the above-described extruder, the liquid crystal polyester 1 (20 parts by mass) obtained in the above <Production of Liquid Crystal Polyester 1> and polyamide 6 (UBE INDUSTRIES, LTD., UBE Nylon (registered trademark), 1013B) (80 parts by mass) were heated to 330°C to prepare a melted state (resin material M).
Next, while supplying the dried fibers 11 to a die (impregnation part 123) fit on a tip of the extruder, the molten resin material M was put in by the extruder from a supply port 123a. In the die (impregnation part 123), the liquid crystal polyester 1 was melted at 330°C, and the carbon fiber were impregnated with the liquid crystal polyester 1. The impregnation amount of the resin material M was adjusted by changing the size of the hole diameter at the outlet of the die (impregnation part 123). By impregnating 100 parts by mass of the resin material M with 25 parts by mass of the carbon fiber, a resin structure 13 in which the carbon fibers were arranged substantially in parallel to a longitudinal direction of the liquid crystal polyester resin layer was obtained.
Thereafter, the resin structure 13 in a heated state in the die (impregnation part 123) was cooled to 150°C or lower by a cooling part 125.

· Step of Obtaining Pellets

Next, the cooled strand-shaped resin structure 13 was continuously picked up by the belt haul-off machine (haul-off part 127) at a haul-off speed of 10 m/min, fed to a pelletizer (cut part 129), cut to a length of 12 mm in the longitudinal direction thereof to obtain liquid crystal polyester resin pellets 15 of Comparative Example 17, having a cylindrical shape (length: 12 mm). The length-weighted average fiber length of the fibrous filler (carbon fiber) was 12 mm.

<Production of unnotched Specimen>

The liquid crystal polyester resin pellets 15 of Comparative Example 17 were put into an injection molding machine TR450EH3 (manufactured by Sodick Co., Ltd.) having a molding temperature of 330°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the specimen. In addition, the Charpy impact test was performed in the same manner as in Example 1. The results of the length-weighted average fiber length of the fibrous filler in the unnotched specimen and the Charpy impact strength are shown in Table 4.

(Comparative Example 18)

Liquid crystal polyester resin pellets 15 of Comparative Example 18 having a cylindrical shape (length: 12 mm) were obtained in the same manner as in Comparative Example 17, except that the liquid crystal polyester 1 (20 parts by mass) and the polyamide 6 (80 parts by mass) in Comparative Example 17 were changed to the liquid crystal polyester 1 (50 parts by mass) and the polyamide 6 (50 parts by mass), and the carbon fiber (25 parts by mass) was changed to glass fiber (manufactured by Nitto Boseki Co., Ltd., RS110QL483AC, E-glass, number-average fiber diameter: 17 $\mu$m) (67 parts by mass). The length-weighted average fiber length of the fibrous filler included in the pellets was 12 mm.

<Production of unnotched Specimen>

The liquid crystal polyester resin pellets 15 of Comparative Example 18 were put into an injection molding machine TR450EH3 (manufactured by Sodick Co., Ltd.) having a molding temperature of 330°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the specimen. In addition, the Charpy impact test was performed in the same manner as in Example 1. The results of the length-weighted average fiber length of the fibrous filler in the unnotched specimen and the Charpy impact strength are shown in Table 4.

(Comparative Example 19)

Liquid crystal polyester resin pellets 15 of Comparative Example 19 having a cylindrical shape (length: 12 mm) were obtained in the same manner as in Comparative Example 17, except that the liquid crystal polyester 1 (20 parts by mass) and the polyamide 6 (80 parts by mass) in Comparative Example 17 were changed to the liquid crystal polyester 1 (70 parts by mass) and the polyamide 6 (30 parts by mass), and the carbon fiber (25 parts by mass) was changed to the carbon fiber (67 parts by mass). The length-weighted average fiber length of the fibrous filler included in the pellets was 12 mm.

<Production of unnotched Specimen>

The liquid crystal polyester resin pellets 15 of Comparative Example 19 were put into an injection molding machine TR450EH3 (manufactured by Sodick Co., Ltd.) having a molding temperature of 330°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the specimen. In addition, the Charpy impact test was performed in the same manner as in Example 1. The results of the length-weighted average fiber length of the fibrous filler in the unnotched specimen and the Charpy impact strength are shown in Table 4.

(Comparative Example 20)

Liquid crystal polyester resin pellets 15 of Comparative Example 20 having a cylindrical shape (length: 12 mm) were obtained in the same manner as in Comparative Example 17, except that the liquid crystal polyester 1 (20 parts by mass) and the polyamide 6 (80 parts by mass) in Comparative Example 17 were changed to the liquid crystal polyester 1 (70 parts by mass) and the polyamide 6 (30 parts by mass), and the carbon fiber (25 parts by mass) was changed to glass fiber (manufactured by Nitto Boseki Co., Ltd., RS110QL483AC, E-glass, number-average fiber diameter: 17 $\mu$m) (67 parts

by mass). The length-weighted average fiber length of the fibrous filler included in the pellets was 12 mm.

<Production of unnotched Specimen>

The liquid crystal polyester resin pellets 15 of Comparative Example 20 were put into an injection molding machine TR450EH3 (manufactured by Sodick Co., Ltd.) having a molding temperature of 330°C, a multipurpose specimen (type A1) compliant with JIS K 7139 was produced by injecting into a mold with a mold temperature of 100°C at an injection speed of 20 mm/s, a screw rotation speed of 100 rpm, a holding pressure of 100 MPa, and a back pressure of 0 MPa, and an unnotched specimen, having a width of 10 mm, a length of 80 mm, and a thickness of 4 mm, was cut out from the specimen. In addition, the Charpy impact test was performed in the same manner as in Example 1. The results of the length-weighted average fiber length of the fibrous filler in the unnotched specimen and the Charpy impact strength are shown in Table 4.

[Charpy Impact Strength of notched Specimen]

Regarding the unnotched specimens, having a width of 10 mm, a length of 80 mm, and a thickness of 4 mm, in Examples 1 to 18 and Comparative Examples 1 to 3 and 5 to 20, each notch processing was performed notched angle of 45° and a depth of 2 mm in accordance with ISO 2818 and JIS K 7144. In the notch processing, a notching tool (manufactured by TOYO SEIKI CO., LTD., Model A-4) was used, and using these notched specimen, a Charpy impact test was performed using hammers 2.0J and 4.0J in accordance with ISO179-1 and JIS K 7111-1. For a Charpy impact strength of the notched specimen, an average value of 5 measurements was adopted. From the notched Charpy impact strength and the unnotched Charpy impact strength Eb, each notch sensitivity was obtained from Expression "1 - (Ea / Eb)". The results of the Charpy impact strength and the notch sensitivity are shown in Tables 1 to 4.

[Table 1]

| | | | Example 1 | Example 2 | Example 3 | Example 4 | Example 5 | Example 6 | Example 7 | Example 8 | Example |
|---|---|---|---|---|---|---|---|---|---|---|---|
| Liquid crystal polyester resin pellets | Liquid crystal polyester 1 | Part by mass | 100 | 100 | 100 | 100 | 100 | 100 | 100 | 100 | |
| | Liquid crystal polyester 2 | Part by mass | | | | | | | | | 100 |
| | Liquid crystal polyester 3 | Part by mass | | | | | | | | | |
| | Polyamide 6 | Part by mass | | | | | | | | | |
| | Fibrous filler (carbon fiber) | Part by mass | 25 | 43 | 67 | 100 | | | | | 67 |
| | Fibrous filler (glass fiber) | Part by mass | | | | | 25 | 43 | 67 | 100 | |
| | Length of liquid crystal polyester resin pellets | mm | 12 | 12 | 12 | 12 | 12 | 12 | 12 | 12 | 12 |
| Liquid crystal polyester resin molded article | Length-weighted average fiber length of fibrous filler | mm | 12 | 12 | 12 | 12 | 12 | 12 | 12 | 12 | 12 |
| | Length-weighted average fiber length of fibrous filler | mm | 3.26 | 2.72 | 0.98 | 0.75 | 4.26 | 3.85 | 4.51 | 3.75 | 0.75 |
| | Proportion of fibrous filler having fiber length of equal to or greater than 1 mm | % | 53 | 31 | 13 | 10 | 85 | 67 | 85 | 60 | 8.8 |
| | Charpy impact strength (unnotched) | kJ/m$^2$ | 27 | 28 | 19 | 14 | 48 | 59 | 67 | 41 | 10 |
| | Charpy impact strength (notched) | kJ/m$^2$ | 22 | 24 | 22 | 10 | 41 | 57 | 50 | 35 | 9 |
| | Notch sensitivity | - | 0.19 | 0.14 | -0.16 | 0.29 | 0.15 | 0.03 | 0.23 | 0.15 | 0.10 |

[Table 2]

| | | | Example 10 | Example 11 | Example 12 | Example 13 | Example 14 | Example 15 | Example 16 | Example 17 | Example 18 |
|---|---|---|---|---|---|---|---|---|---|---|---|
| Liquid crystal polyester resin pellets | Liquid crystal polyester 1 | Part by mass | | | | 75 | 80 | 90 | 75 | 80 | 90 |
| | Liquid crystal polyester 2 | Part by mass | 100 | | | | | | | | |
| | Liquid crystal polyester 3 | Part by mass | | 100 | 100 | | | | | | |
| | Polyamide 6 | Part by mass | | | | 25 | 20 | 10 | 25 | 20 | 10 |
| | Fibrous filler (carbon fiber) | Part by mass | | 67 | | 67 | 67 | 67 | | | |
| | Fibrous filler (glass fiber) | Part by mass | 67 | | 67 | | | | 67 | 67 | 67 |
| | Length of liquid crystal polyester resin pellets | mm | 12 | 12 | 12 | 12 | 12 | 12 | 12 | 12 | 12 |
| | Length-weighted average fiber length of fibrous filler | mm | 12 | 12 | 12 | 12 | 12 | 12 | 12 | 12 | 12 |
| Liquid crystal polyester resin molded article | length-weighted average fiber length of fibrous filler | mm | 1.51 | 1.00 | 1.25 | 5.24 | 5.95 | 4.22 | 4.71 | 5.70 | 5.50 |
| | Proportion of fibrous filler having fiber length of equal to or greater than 1 mm | % | 21 | 11 | 14 | 91 | 89 | 85 | 75 | 90 | 80 |
| | Charpy impact strength (unnotched) | kJ/m$^2$ | 15 | 14 | 19 | 14 | 17 | 11 | 26 | 21 | 24 |
| | Charpy impact strength (notched) | kJ/m$^2$ | 12 | 12 | 15 | 12 | 15 | 12 | 20 | 17 | 22 |
| | Notch sensitivity | - | 0.20 | 0.17 | 0.22 | 0.14 | 0.12 | -0.09 | 0.23 | 0.18 | 0.09 |

EP 4 011 949 B1

31

[Table 3]

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|
| Liquid crystal polyester resin pellets | Liquid crystal polyester 1 | Part by mass | 100 | 100 | 100 | 100 | 100 | 100 | 100 | 100 | | |
| | Liquid crystal polyester 2 | Part by mass | | | | | | | | | 100 | 100 |
| | Liquid crystal polyester 3 | Part by mass | | | | | | | | | | |
| | Polypropylene | Part by mass | | | | | | | | | | |
| | Polyamide 66 | Part by mass | | | | | | | | | | |
| | Polyamide 6 | Part by mass | | | | | | | | | | |
| | Fibrous filler (carbon fiber) | Part by mass | 25 | 43 | 67 | 100 | | | | | 67 | |
| | Fibrous filler (glass fiber) | Part by mass | | | | | 25 | 43 | 67 | 100 | | 67 |
| | Length of resin pellets | mm | 3 | 3 | 3 | | 3 | 3 | 3 | 3 | 3 | 3 |
| | Length-weighted average fiber length of fibrous filler | mm | < 1 | < 1 | < 1 | | < 1 | < 1 | < 1 | < 1 | < 1 | < 1 |

32

(continued)

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|
| Liquid crystal polyester resin molded article | Length-weighted average fiber length of fibrous filler | mm | 0.31 | 0.34 | 0.23 | Cannot be granulated | 0.40 | 0.40 | 0.20 | 0.40 | 0.20 | 0.34 |
| | Content proportion of fibrous filler having fiber length of equal to or greater than 1 mm | % | 1.0 | 1.0 | 0.2 | | 1.0 | 1.0 | 1.0 | 0.8 | 0.0 | 0.4 |
| | Charpy impact strength (un-notched) | $kJ/m^2$ | 34 | 26 | 18 | | 24 | 21 | 17 | 14 | 10 | 15 |
| | Charpy impact strength (notched) | $kJ/m^2$ | 9 | 8 | 6 | | 12 | 11 | 10 | 7 | 5 | 8 |
| | Notch sensitivity | | 0.74 | 0.69 | 0.67 | | 0.50 | 0.48 | 0.41 | 0.50 | 0.50 | 0.47 |

EP 4 011 949 B1

[Table 4]

| Liquid crystal polyester resin pellets | | | Comparative Example 11 | Comparative Example 12 | Comparative Example 13 | Comparative Example 14 | Comparative Example 15 | Comparative Example 16 | Comparative Example 17 | Comparative Example 18 | Comparative Example 19 | Comparative Example 20 |
|---|---|---|---|---|---|---|---|---|---|---|---|---|
| | Liquid crystal polyester 1 | Part by mass | | | | | | | 20 | 50 | 70 | 70 |
| | Liquid crystal polyester 2 | Part by mass | | | | | | | | | | |
| | Liquid crystal polyester 3 | Part by mass | 100 | 100 | | | | | | | | |
| | Polypropylene | Part by mass | | | 100 | 100 | | | | | | |
| | Polyamide 66 | Part by mass | | | | | 100 | 100 | | | | |
| | Polyamide 6 | Part by mass | | | | | | | 80 | 50 | 30 | 30 |
| | Fibrous filler (carbon fiber) | Part by mass | 67 | | 67 | | 67 | | 25 | | 67 | |
| | Fibrous filler (glass fiber) | Part by mass | | 67 | | 67 | | 100 | | 67 | | 67 |
| | Length of resin pellets | mm | 3 | 3 | 8 | 10 | 9 | 9 | 12 | 12 | 12 | 12 |
| | Length-weighted average fiber length of fibrous filler | mm | < 1 | < 1 | 8 | 10 | 9 | 9 | 12 | 12 | 12 | 12 |

34

EP 4 011 949 B1

(continued)

| | | | Comparative Example 11 | Comparative Example 12 | Comparative Example 13 | Comparative Example 14 | Comparative Example 15 | Comparative Example 16 | Comparative Example 17 | Comparative Example 18 | Comparative Example 19 | Comparative Example 20 |
|---|---|---|---|---|---|---|---|---|---|---|---|---|
| Liquid crystal polyester resin molded article | Length-weighted average fiber length of fibrous filler | mm | 0.51 | 0.51 | 0.73 | 1.01 | 0.77 | 1.57 | 2.53 | 3.01 | 3.34 | 3.95 |
| | Content proportion of fibrous filler having fiber length of equal to or greater than 1 mm | % | 4.2 | 4.8 | - | - | - | - | - | - | - | - |
| | Charpy impact strength (un-notched) | kJ/m$^2$ | 12 | 29 | 29 | 68 | 86 | 106 | 38 | 39 | 36 | 19 |
| | Charpy impact strength (notched) | kJ/m$^2$ | 6 | 15 | 12 | 17 | 16 | 25 | 14 | 18 | 18 | 10 |
| | Notch sensitivity | - | 0.49 | 0.49 | 0.59 | 0.75 | 0.81 | 0.76 | 0.72 | 0.55 | 0.50 | 0.47 |

From the results shown in Tables 1 to 4, it was shown that, compared to the specimens of Comparative Examples 1 to 3 and 5 to 20, the specimens of the liquid crystal polyester resin molded bodies of Examples 1 to 18 had a smaller notch sensitivity.

Since the specimens of the liquid crystal polyester resin molded bodies of Examples 1 to 18 had a small notch sensitivity, it was possible to secure a degree of freedom in designing a molded article molded by using a liquid crystal polyester resin composition having the same composition as the specimen.

[Reference Signs List]

> 10: fiber roving
> 11: fiber bundle
> 13: resin structure
> 15: pellets
> 100: production equipment
> 120: extruder
> 121: preheating part
> 123: impregnation part
> 123a: supply port
> 125: cooling part
> 127: haul-off part
> 129: cut part
> 101 to 109: feeding roll
> M: resin material

**Claims**

1. A liquid crystal polyester resin molded article comprising:

   > a thermoplastic resin comprising a liquid crystal polyester; and
   > a fibrous filler,
   > wherein the liquid crystal polyester resin molded article contains the fibrous filler in an amount of equal to or greater than 1 part by mass and equal to or smaller than 120 parts by mass with respect to 100 parts by mass of the thermoplastic resin,
   > a proportion of the liquid crystal polyester with respect to 100 mass% of the thermoplastic resin is equal to or greater than 80 mass% and equal to or smaller than 100 mass%, and
   > a length-weighted average fiber length of the fibrous filler is equal to or greater than 0.7 mm, wherein the length-weighted average fiber length of the fibrous filler is determined using the method described in the description.

2. The liquid crystal polyester resin molded article according to Claim 1,

   > wherein the liquid crystal polyester comprises a repeating unit represented by Formula (1), (2), or (3),
   > an amount of the repeating unit represented by Formula (1) is equal to or greater than 30 mol% and equal to or smaller than 100 mol% with respect to a total amount of the repeating units represented by Formulae (1), (2), and (3),
   > an amount of the repeating unit represented by Formula (2) is equal to or greater than 0 mol% and equal to or smaller than 35 mol% with respect to the total amount of the repeating units represented by Formulae (1), (2), and (3), and
   > an amount of the repeating unit represented by Formula (3) is equal to or greater than 0 mol% and equal to or smaller than 35 mol% with respect to the total amount of the repeating units represented by Formulae (1), (2), and (3),

   > (1) -O-Ar$^1$-CO-
   > (2) -CO-Ar$^2$-CO-
   > (3) -X-Ar$^3$-Y-
   > (in Formulae (1) to (3), Ar$^1$ represents a phenylene group, a naphthylene group, or a biphenylylene group, Ar$^2$

and Ar[3] each independently represent a phenylene group, a naphthylene group, a biphenylene group, or a group represented by Formula (4), X and Y each independently represent an oxygen atom or an imino group, and hydrogen atoms in the group represented by Ar[1], Ar[2], or Ar[3] may be each independently substituted with a halogen atom, an alkyl group, or an aryl group)

(4) -Ar[4]-Z-Ar[5]-

(in Formula (4), Ar[4] and Ar[5] each independently represent a phenylene group or a naphthylene group, and Z represents an oxygen atom, a sulfur atom, a carbonyl group, a sulfonyl group, or an alkylidene group).

3. The liquid crystal polyester resin molded article according to Claim 1 or 2, wherein the fibrous filler is at least one selected from the group consisting of a carbon fiber and a glass fiber.

4. The liquid crystal polyester resin molded article according to any one of Claims 1 to 3, wherein a proportion of a fibrous filler having a fiber length of equal to or greater than 1 mm with respect to 100% of the fibrous filler is equal to or greater than 8% and equal to or smaller than 100%.

**Patentansprüche**

1. Ein Formgegenstand aus Flüssigkristallpolyesterharz, umfassend:

ein thermoplastisches Harz, umfassend einen Flüssigkristallpolyester; und
einen faserförmigen Füllstoff,
wobei der Formgegenstand aus Flüssigkristallpolyesterharz den faserförmigen Füllstoff in einer Menge gleich oder größer als 1 Masseteil und gleich oder kleiner als 120 Massenteilen, bezogen auf 100 Massenteilen des thermoplastischen Harzes, enthält,
ein Anteil des Flüssigkristallpolyesters, bezogen auf 100 Massen-% des thermoplastischen Harzes, gleich oder größer als 80 Massen-% und gleich oder kleiner als 100 Massen-% ist, und
eine längengewichtete durchschnittliche Faserlänge des faserförmigen Füllstoffs gleich oder größer als 0,7 mm ist, wobei die längengewichtete durchschnittliche Faserlänge des faserförmigen Füllstoffs unter Verwendung des in der Beschreibung beschriebenen Verfahrens bestimmt wird.

2. Der Formgegenstand aus Flüssigkristallpolyesterharz gemäß Anspruch 1,

wobei der Flüssigkristallpolyester eine Wiederholungseinheit, dargestellt durch die Formel (1), (2) oder (3), umfasst,
eine Menge der Wiederholungseinheit, dargestellt durch die Formel (1), gleich oder größer als 30 Mol-% und gleich oder kleiner als 100 Mol-%, bezogen auf eine Gesamtmenge der Wiederholungseinheiten, dargestellt durch die Formeln (1), (2) und (3), ist,
eine Menge der Wiederholungseinheit, dargestellt durch die Formel (2), gleich oder größer als 0 Mol-% und gleich oder kleiner als 35 Mol-%, bezogen auf die Gesamtmenge der Wiederholungseinheiten, dargestellt durch die Formeln (1), (2) und (3), ist, und eine Menge der Wiederholungseinheit, dargestellt durch die Formel (3), gleich oder größer als 0 Mol-% und gleich oder kleiner als 35 Mol-%, bezogen auf die Gesamtmenge der Wiederholungseinheiten, dargestellt durch die Formeln (1), (2) und (3), ist,

(1) -O-Ar[1]-CO-
(2) -CO-Ar[2]-CO-
(3) -X-Ar[3]-Y-
(in den Formeln (1) bis (3), stellt Ar[1] eine Phenylengruppe, eine Naphthylengruppe oder eine Biphenylylengruppe dar, Ar[2] und Ar[3] stellen jeweils unabhängig eine Phenylengruppe, eine Naphthylengruppe, eine Biphenylengruppe oder eine Gruppe, dargestellt durch Formel (4), dar, X und Y stellen jeweils unabhängig ein Sauerstoffatom oder eine Iminogruppe dar, und Wasserstoffatome in der durch Ar[1], Ar[2] oder Ar[3] dargestellten Gruppe können jeweils unabhängig mit einem Halogenatom, einer Alkylgruppe oder einer Arylgruppe substituiert sein)
(4) -Ar[4]-Z-Ar[5]-
(in Formel (4), stellen Ar[4] und Ar[5] jeweils unabhängig eine Phenylengruppe oder eine Naphthylengruppe dar, und Z stellt ein Sauerstoffatom, ein Schwefelatom, eine Carbonylgruppe, eine Sulfonylgruppe oder eine Alkylidengruppe dar).

3. Der Formgegenstand aus Flüssigkristallpolyesterharz gemäß Anspruch 1 oder 2,
wobei der faserförmige Füllstoff mindestens einer, ausgewählt aus der Gruppe bestehend aus einer Kohlenstofffaser und einer Glasfaser, ist.

4. Der Formgegenstand aus Flüssigkristallpolyesterharz gemäß einem der Ansprüche 1 bis 3,
wobei ein Anteil eines faserförmigen Füllstoffes mit einer Faserlänge von gleich oder größer als 1 mm, bezogen auf 100% des faserförmigen Füllstoffes, gleich oder größer als 8% und gleich oder kleiner als 100% ist.

**Revendications**

1. Article moulé en résine de polyester cristal liquide comprenant :

une résine thermoplastique comprenant un polyester cristal liquide ; et
une charge fibreuse,
dans lequel l'article moulé en résine de polyester cristal liquide contient la charge fibreuse en une quantité supérieure ou égale à 1 partie en masse et inférieure ou égale à 120 parties en masse pour 100 parties en masse de résine thermoplastique,
la proportion du polyester cristal liquide pour 100 % en masse de résine thermoplastique est supérieure ou égale à 80 % en masse et inférieure ou égale à 100 % en masse, et
la longueur de fibre moyenne pondérée en longueur de la charge fibreuse est supérieure ou égale à 0,7 mm, laquelle longueur de fibre moyenne pondérée en longueur de la charge fibreuse est déterminée par utilisation de la méthode décrite dans la description.

2. Article moulé en résine de polyester cristal liquide selon la revendication 1, dans lequel

le polyester cristal liquide comprend un motif répétitif représenté par la formule (1), (2) ou (3),
la quantité du motif répétitif représenté par la formule (1) est supérieure ou égale à 30 % en moles et inférieure ou égale à 100 % en moles par rapport à la quantité totale des motifs répétitifs représentés par les formules (1), (2) et (3),
la quantité du motif répétitif représenté par la formule (2) est supérieure ou égale à 0 % en moles et inférieure ou égale à 35 % en moles par rapport à la quantité totale des motifs répétitifs représentés par les formules (1), (2) et (3), et
la quantité du motif répétitif représenté par la formule (3) est supérieure ou égale à 0 % en moles et inférieure ou égale à 35 % en moles par rapport à la quantité totale des motifs répétitifs représentés par les formules (1), (2) et (3),

(1) -O-Ar$^1$-CO-
(2) -CO-Ar$^2$-CO-
(3) -X-Ar$^3$-Y-
(dans les formules (1) à (3), Ar$^1$ représente un groupe phénylène, un groupe naphtylène, ou un groupe biphénylylène, chacun de Ar$^2$ et Ar$^3$ représente indépendamment un groupe phénylène, un groupe naphtylène, un groupe biphénylène, ou un groupe représenté par la formule (4), chacun de X et Y représente indépendamment un atome d'oxygène ou un groupe imino, et chacun des atomes d'hydrogène dans le groupe représenté par Ar$^1$, Ar$^2$ ou Ar$^3$ peut être indépendamment substitué par un atome d'halogène, un groupe alkyle, ou un groupe aryle)
(4) -Ar$^4$-Z-Ar$^5$-
(dans la formule (4), chacun de Ar$^4$ et Ar$^5$ représente indépendamment un groupe phénylène ou un groupe naphtylène, et Z représente un atome d'oxygène, un atome de soufre, un groupe carbonyle, un groupe sulfonyle, ou un groupe alkylidène).

3. Article moulé en résine de polyester cristal liquide selon la revendication 1 ou 2, dans lequel la charge fibreuse est au moins l'une choisie dans l'ensemble constitué par les fibres de carbone et les fibres de verre.

4. Article moulé en résine de polyester cristal liquide selon l'une quelconque des revendications 1 à 3, dans lequel la proportion de charge fibreuse ayant une longueur de fibre supérieure ou égale à 1 mm pour 100 % de la charge fibreuse est supérieure ou égale à 8 % et inférieure ou égale à 100 %.

EP 4 011 949 B1

**FIG. 1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019148154 A
- JP 2020073526 A
- WO 2019087965 A1
- JP 2012193270 A

**Non-patent literature cited in the description**

- Liquid Crystal Polymer, -Synthesis·Molding·Application. CMC Co., Ltd., 05 June 1987, 95